(19) Europäisches Patentamt / European Patent Office / Office européen des brevets

(11) **EP 3 962 080 A1**

(12) **EUROPEAN PATENT APPLICATION**

(43) Date of publication:
**02.03.2022 Bulletin 2022/09**

(21) Application number: **20305952.2**

(22) Date of filing: **26.08.2020**

(51) International Patent Classification (IPC):
**H04N 19/11** (2014.01)    **H04N 19/105** (2014.01)
**H04N 19/14** (2014.01)    **H04N 19/176** (2014.01)
**H04N 19/186** (2014.01)    **H04N 19/593** (2014.01)

(52) Cooperative Patent Classification (CPC):
**H04N 19/11; H04N 19/105; H04N 19/14;
H04N 19/176; H04N 19/186; H04N 19/593**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ATEME**
**78140 Velizy Villacoublay (FR)**

(72) Inventor: **ABDOLI, Mohsen**
**35235 THORIGNE FOUILLARD (FR)**

(74) Representative: **Plasseraud IP**
**66, rue de la Chaussée d'Antin
75440 Paris Cedex 09 (FR)**

(54) **METHOD AND APPARATUS FOR IMAGE PROCESSING**

(57)    A method of processing an image is provided, which comprises, extract from the image a plurality of component images comprising a first chroma component image and a second chroma component image, divide each of the plurality of component images into respective sets of component pixel blocks, and define respective processing sequences of the component pixel blocks of the sets of component pixel blocks, for a current chroma component pixel block of the respective set of component pixel blocks of the first and/or second chroma component image, perform an intra mode prediction method to obtain one or more intra prediction modes for the current chroma component pixel block. The intra mode prediction method comprises, for the current chroma component pixel block: determining an application area comprising a set of at least one pixel in at least one pixel block of one of the plurality of component images, wherein the at least one pixel block has already been processed according to a respective processing sequence defined for the one of the plurality of component images, performing a gradient analysis on at least one pixel of the application area, selecting, based on results of the gradient analysis, at least one intra prediction video coding mode among a plurality of intra prediction video coding modes usable for encoding and/or decoding the current chroma component pixel block.

FIG. 4

EP 3 962 080 A1

**Description**

The present disclosure relates to the field of image encoding, in particular for video stream compression.

Video data is often source encoded so as to decrease the amount of resources necessary for its transmission and/or storage in memory. Various video coding or compression standards that have been developed over the recent years, such as H.264/AVC, H.265/HEVC or MPEG-2, may be used for that purpose.

In known video coding or compression schemes, images (also referred to as "frames") of an input video stream to be encoded are typically processed according to an image encoding sequence, and each image is divided into pixel sets (also referred to as, depending on the scheme, "blocks" or "coding unit") which are also processed sequentially, for example starting from the set located in the upper left corner of the image, and ending with the set located in the lower right corner of the image.

The encoding of an image of an input video stream may therefore involve dividing a pixel matrix corresponding to the image into several pixel sets, for example into blocks of a fixed size (16 x 16 pixels, 32 x 32 pixels, or 64 x 64 pixels), and encoding these pixel blocks according to a predefined encoding sequence. In some standards, such as H.264/AVC, blocks smaller than 16 x 16 pixels may be defined (for example of size 8 x 8 pixels or 4 x 4 pixels) so as to perform encoding of the image with a finer granularity.

Conventional video compression schemes can be classified into two main categories: an intra prediction video coding category on the one hand, and an inter prediction video coding category on the other hand. In intra prediction video coding, also referred to as spatial prediction video coding, the compression processing uses for the prediction spatial redundancies based on pixels of the current image or video frame, while in inter prediction video coding, also referred to as temporal prediction video coding, the compression processing uses for the prediction temporal redundancies based on pixels of several images or video frames (previously encoded and reconstructed video frames, which may correspond to previous and/or future frames with respect to a current frame in an input video sequence). More specifically, in intra prediction video coding, the processing of a pixel block (or set of pixels) typically includes a prediction of the pixels of the block based on reconstructed pixels that have been previously encoded (also called "causal pixels") in the image currently being encoded (which may be referred to as "current image"). In inter prediction video coding, the processing of a pixel block typically includes a prediction of the pixels of the block based on pixels of one or more previously encoded images.

Exploiting the spatial redundancies (for intra prediction video coding) and/or time redundancies (for inter prediction video coding) is therefore performed to avoid transmitting or storing the pixel values of each pixel block (or set of pixels), and at least some of the blocks of each encoded image in a video stream is represented by a pixel residual that corresponds to the difference (or the distance) between prediction values and true values for the pixels of the predicted block. Information related to pixel residual is inserted in the encoded data generated by a video encoder after transform (e.g. Discrete Cosinus Transform, DCT) and quantization so as to reduce the entropy of data generated by the encoder.

In conventional encoding standards using prediction coding, additional information is generated by pixel prediction. Its corresponding data (also called prediction information) is inserted in the output data generated by the encoder. In the intra coding mode, the intra prediction mode defining how the prediction of the current block is performed using neigboring samples (which may be referred to as "reference samples"), is an example of such prediction information. For intra prediction coding, an estimate of between 4% and 15% of the bit stream at the output of a video encoder may correspond to data to be provided to a decoder for information related to pixel prediction used to encode the input video stream. Therefore it is desirable to improve the efficiency of video encoding/compression by decreasing the amount of data generated at the output of the encoder and corresponding to pixel prediction information (such as, for example, intra prediction modes, or motion vectors), while preserving performance of the encoder (encoding gain).

There is therefore a need for providing an improved video processing scheme and video encoder and/or decoder implementing the same that address at least some of the above-described drawbacks and shortcomings of the conventional technology in the art.

It is an object of the present subject disclosure to provide an improved video processing scheme and apparatus implementing the same.

Another object of the present subject disclosure is to provide an improved video encoding or compression and/or video decoding or decompression scheme and apparatuses implementing the same.

Another object of the present subject disclosure is to provide an improved video encoding and/or decoding scheme and apparatuses implementing the same for alleviating the above-described drawbacks and shortcomings of conventional prediction-based video encoding/decoding schemes, in particular video encoding/decoding schemes using intra prediction encoding of pixel blocks of images of an input video stream to be encoded.

To achieve these objects and other advantages and in accordance with the purpose of the present subject disclosure, as embodied and broadly described herein, in one aspect of the present subject disclosure, a method of processing an image, a digital video frame, or more generally digital video data, is proposed, which comprises: extract from the image a plurality of component images comprising a first chroma component image and a second chroma component image; divide each of the plurality of component images into respective sets of component pixel blocks, and define respective processing sequences of the component pixel blocks of the sets of component pixel blocks; for a current chroma component pixel block of the respective set of component pixel blocks of the first and/or second chroma component image, perform an intra mode prediction method to obtain one or more intra prediction modes for the current chroma component pixel block, wherein the intra mode prediction method comprises, for the current chroma component pixel block: determining an application area comprising a set of at least one pixel in at least one pixel block of one of the plurality of component images, wherein the at least one pixel block has already been processed according to a respective processing sequence defined for the one of the plurality of component images; performing a gradient analysis (e.g. of texture) on at least one pixel of the application area; and selecting, based on results of the gradient analysis, at least one intra prediction video coding mode among a plurality of intra prediction video coding modes usable for encoding and/or decoding the current chroma component pixel block.

Therefore, advantageously, an implicit intra prediction mode (IPM) may be derived for at least one chroma component pixel block of an input image to be encoded, thereby leveraging the rate saving associated with the explicit signaling of the IPM including for chrominance blocks on the input image. In video coding or image analysis applications, different implicit IPM may be derived for luminance blocks and chrominance blocks of an input image or video frame.

In video codec applications, Decoder-side derived Intra Mode Derivation (DIMD) schemes, which have been proposed for luminance component images, provide IPM derivation schemes based on a gradient-based analysis of texture that can be implemented at both ends of the codec, that is, at an encoder and at a decoder. There is therefore no longer a requirement for explicitly signaling the IPM, as it can be determined at both the encoder and at the decoder. In embodiments of the proposed method, a DIMD scheme may be advantageously used for the chrominance channel, that is, for one or both of chrominance component images of an input image, thereby leveraging the rate savings for the chrominance channel instead of only using a DIMD scheme for the luminance channel.

The proposed scheme is advantageously very flexible. Indeed, depending on the embodiment, the proposed method may advantageously use only two chroma component images extracted from the input image, or two chroma component image as well as a luma component image extracted from the input image. For example, in one or more embodiments, the plurality of component images may comprise the first chroma component image, the second chroma component image, and a luma component image.

Further depending on the embodiment, the DIMD scheme applied on a pixel block of a chroma component image may use data of the chroma component image being processed, data of a chroma component image of the input image different from the chroma component image being processed, and/or data of a luma component image of the input image.

Depending on the embodiment, the current chroma component pixel block may be indifferently in the first or the second chroma component image, or may be in both the first and second chroma component images (for example in case of an identical partitioning of the first and second chroma component images into blocks).

In one or more embodiments, the first chroma component may be a blue-difference, Cb, chroma component, and the second chroma component may be a red-difference, Cr, chroma component. In one or more embodiments using YUV sampling of images, Y being a luminance component, U being a first chrominance component and V being a second chrominance component, the first chroma component may be a U chroma component, and the second chroma component may be a V chroma component

In one or more embodiments, the intra mode prediction method may be performed for at least one current chroma component pixel block of each of the respective sets of component pixel blocks of the first and second chroma component images. Advantageously, a DIMD scheme may be performed for at least one pixel block of each of the first and second chroma component images. Even though the partitioning into blocks of the first and second chroma component images may be similar or even identical, and/or the DIMD scheme performed on the first and second chroma component images may be similar or even identical, the IPM determined based on performing a DIMD for each of the first and second chroma component images may be different, for example as a result of the respective textures of the first and second chroma component images being different. For video coding application, the encoding of a video frame may fully leverage the advantages (including the rate savings) provided by the used DIMD scheme, as such advantages may be obtained, for the encoding of an input image, through the determining of a specific IPM for at least one block of each of the luma component image, the first chroma component image and/or the second chroma component image, and the implicit signaling thereof between the encoder and the decoder.

As discussed above, depending on the embodiment, the partitioning into blocks of the first and second chroma component images may be identical. Such identical partitioning into blocks of the two chrominance component images is indeed specified by various video coding standards, such as the Versatile Video Coding (VVC) standard. Embodiments of the proposed scheme provide that a DIMD method may be performed for at least one block which is common to the first and second chroma component images in cases where there exists at least one such common block. Therefore, in one or more embodiments, the respective sets of component pixel blocks of the first and second chroma component images may comprise at least one common chroma component pixel block used as the current chroma component pixel block, and the intra mode prediction method may be performed on the common chroma component pixel block for each of the first and second chroma component images.

The use of a DIMD scheme typically involves the determination of a so-called application area, which determination may be performed according to embodiments discussed below. Depending on the embodiment, various gradient-based analysis may be performed on the determined application area, resulting in different types of DIMD schemes. For example, in one or more embodiments, the performing the gradient analysis may comprise: for at least one pixel of the application area, computing a gradient representing a directional change of an intensity at the pixel. The selecting of the IPM may then be based on at least one of the computed gradients.

As another example, in one or more embodiments, the performing the gradient analysis may further comprise: computing a first gradient value representing an estimate magnitude of the directional change of the intensity at the at least one pixel, and a second gradient value representing an estimate orientation of the directional change of the intensity at the at least one pixel.

As yet another example, in one or more embodiments, the performing the gradient analysis may comprise: generating respective estimates of derivatives of an intensity level at the at least one pixel in the horizontal and vertical directions by performing a convolution of a source matrix of pixels of the image with horizontal and vertical filter matrices, respectively. Depending on the embodiment, the selecting the intra prediction video coding mode may then comprise: for the at least one pixel of the application area, mapping the computed gradient to an intra prediction mode among the plurality of intra prediction video coding modes.

According to another example, in one or more embodiments, the selecting the intra prediction video coding mode may further comprise: determining respective weight values for several intra prediction modes among the plurality of intra prediction video coding modes, based on gradients computed for pixels of the application area.

Depending on the embodiment, the determination of the application area may advantageously use pixels of one or more of the luminance component image, and the first and second chroma component images, and also use pixels in blocks of one or more of these component images that are collocated with the block being processed or that precede the block being processed according to a processing sequence of blocks defined for the relevant component image. Therefore, in one or more embodiments, the at least one pixel block of the application area may be spatially preceding a pixel block of the one of the plurality of component images corresponding to the current chroma component pixel block of the first or second chroma component image. Alternatively, in one or more embodiments, the at least one pixel block of the application area may be spatially co-located with a pixel block of the one of the plurality of component images corresponding to the current chroma component pixel block of the first or second chroma component image, wherein the one of the plurality of component images is different from the first or second chroma component image in which the current chroma component pixel block is comprised.

Advantageously, various DIMD schemes may be used according to the present subject disclosure as discussed above. For example, in one or more embodiments, the intra mode prediction method may further comprise, for the current chroma component pixel block: selecting at least two intra prediction video coding modes among a plurality of intra prediction video coding modes usable for processing the current chroma component pixel block, wherein at least one of the selected intra prediction video coding modes is selected based on the gradient analysis; determining a plurality of predictors of the current chroma component pixel block based on the at least two selected intra prediction video coding modes; and generating a predictor of the current pixel block based on the determined plurality of predictors. In such embodiments, the proposed method may further comprise: determining weights that are respectively associated with the selected intra prediction video coding modes, and combining the determined predictors using the determined weights.

In one or more embodiments, the determination of the application area may further comprise, for the current chroma component pixel block: based on at least one feature of the current chroma component pixel block and/or of at least one first block preceding the current chroma component pixel block in the processing sequence, determining the application area comprising a set of at least one pixel in at least one second block preceding the current chroma component pixel block in the processing sequence.

In one or more embodiments, the proposed method may further comprise: determine the at least one feature by applying a feature extraction function to the current chroma component pixel block and/or at least one first block preceding the current chroma component pixel block in the processing sequence.

In one or more embodiments, the proposed method may be performed by a processor of an image encoder, and further comprise, at the image encoder: encoding, via the processor, the current chroma component pixel block according to the at least one intra prediction video coding mode selected at the encoder based on the intra mode prediction method performed at the encoder on the current chroma component pixel block.

In one or more embodiments, the proposed method may be performed by a processor of an image decoder, and further comprise, at the image decoder: decoding, via the processor, the current chroma component pixel block according to the at least one intra prediction video coding mode selected at the decoder based on the intra mode prediction method performed at the decoder on the current chroma component pixel block.

Therefore, in some embodiments, an embodiment of the proposed method may be performed at both an image encoder and an image decoder, which may be configured accordingly, so that the advantages of applying a DIMD scheme to a block of a chroma component image (which may indifferently be a first (e.g. Cb) or a second (e.g. Cr) chroma component image), or to respective blocks of both first and second chroma component images, may be fully leveraged by avoiding the explicit signaling of an IPM determined for the block.

In another aspect of the present subject disclosure, an apparatus is proposed, which comprises a processor, and a memory operatively coupled to the processor, wherein the apparatus is configured to perform a method according to an embodiment proposed in the present subject disclosure.

In yet another aspect of the present subject disclosure, a non-transitory computer-readable medium encoded with executable instructions which, when executed, causes an apparatus comprising a processor operatively coupled with a memory, to perform a method according to an embodiment proposed in the present subject disclosure, is proposed.

For example, in embodiments, the present subject disclosure provides a non-transitory computer-readable medium encoded with executable instructions which, when executed, causes an apparatus comprising a processor operatively coupled with a memory, to process an image by performing the extracting from the image, via the processor, a plurality of component images comprising a first chroma component image and a second chroma component image; dividing, via the processor, each of the plurality of component images into respective sets of component pixel blocks, and defining, via the processor, respective processing sequences of the component pixel blocks of the sets of component pixel blocks; for a current chroma component pixel block of the respective set of component pixel blocks of the first and/or second chroma component image, performing, via the processor, an intra mode prediction method to obtain one or more intra prediction modes for the current chroma component pixel block, wherein the intra mode prediction method comprises, for the current chroma component pixel block: determining an application area comprising a set of at least one pixel in at least one pixel block of one of the plurality of component images, wherein the at least one pixel block has already been processed according to a respective processing sequence defined for the one of the plurality of component images; performing a gradient analysis (e.g. of texture) on at least one pixel of the application area; and selecting, based on results of the gradient analysis, at least one intra prediction video coding mode among a plurality of intra prediction video coding modes usable for encoding and/or decoding the current chroma component pixel block.

In yet another aspect of the present subject disclosure, a computer program product comprising computer program code tangibly embodied in a computer readable medium, said computer program code comprising instructions to, when provided to a computer system and executed, cause said computer to perform a method according to an embodiment proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1 is a block diagram illustrating an exemplary video encoder on which the proposed method may be implemented in accordance with one or more embodiments;

Figures 2a - 2e illustrate exemplary intra prediction modes, to which the proposed method may be applied in accordance with one or more embodiments;

Figure 3a is a block diagram illustrating an exemplary baseline DIMD video processing method that may be used in one or more embodiments;

Figure 3b is a block diagram illustrating an exemplary extended DIMD video processing method in accordance with one or more embodiments;

Figure 3c is a block diagram illustrating an exemplary extended DIMD video processing method in accordance with one or more embodiments;

Figure 3d is a block diagram illustrating an exemplary sparse DIMD video processing method in accordance with one or more embodiments;

Figure 3e is a block diagram illustrating an exemplary sparse DIMD video processing method in accordance with one or more embodiments;

Figure 4 is a block diagram illustrating an exemplary video processing method in accordance with one or more embodiments;

Figure 5a, 5b, 5c, and 5d respectively illustrate a YCbCr image, the corresponding Y component image divided into blocks, the corresponding Cb component image divided into blocks, and the corresponding Cr component image divided into blocks;

Figure 5e shows an exemplary YCbCr image on which the proposed method may be performed according to some embodiments, and Figures 5f and 5g respectively show its Cb and Cr chrominance component images.

Figures 6a - 6d illustrate exemplary application areas usable for the baseline DIMD or extended DIMD schemes;

Figure 7 shows a histogram of intra prediction video coding modes in accordance with one or more embodiments;

Figures 8a and 8b respectively illustrate an application area and the calculation of a gradient for a pixel of the application area;

Figures 9a and 9b illustrate embodiments of the extended DIMD method;

Figure 10 illustrates an exemplary apparatus according to one or more embodiments;

Figures 10a and 10b illustrate embodiments of the sparse DIMD method;

Figure 11a is a block diagram illustrating an exemplary video decoder on which the proposed method may be implemented in accordance with one or more embodiments.

Fig. 11b illustrates angular IPMs specified for the VVC codec.

Fig. 11c illustrates a correlation between content texture and implicitly derived angular IPMs using DIMD.

## Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

In the present description, the terms "terminal", "user equipment", "reader", "reading device", "reading terminal" and "video reader" are used interchangeably to denote any type of device, implemented by one or more items of software, one or more items of hardware, or a combination or one or more items of software and one or more items of hardware, configured so as to use multimedia content distributed in accordance with a distribution protocol, for example a multi-screen distribution protocol, in particular by loading and by reading the content. The terms "client" and "video-reading client" are also used interchangeably to denote any type of device, software and/or hardware, or any function or set of functions, implemented by software and/or hardware within a device and configured so as to use multimedia content distributed in accordance with a distribution protocol, for example a multi-screen distribution protocol, in particular by loading the content from a server and by reading the content.

The terms "network" and "communication network" as used in the present description refer to one or more data links that may couple or connect possibly virtualized equipment so as to allow electronic data to be transported between computer systems and/or modules and/or other devices or electronic equipment, such as between a server and a client device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols, and interoperate with larger networks. Various types of equipment may be used to make various architectures or various protocols interoperable. For example, a router may be used to provide a communication link or a data link between two LANs that would otherwise be separate and independent.

As used herein, the term "pixel" means a picture element or an elementary component of an image, a color component image, or a (luma or chroma) channel type image, and data corresponding thereto, which may be represented by a numeric value, e.g. a natural integer value. A pixel of a digital image may be coded digitally, and its value may be coded into a bitstream. Further, a pixel of an image may represent image data according to color spaces, such as the Y, Cb and Cr color spaces, wherein Y is a luma component of the pixel (also called in the present subject disclosure a luma pixel, a luma sample, or for the sake of simplicity a pixel), and $C_b$ and $C_r$ are the blue-difference and red-difference chroma components of the pixel (also called in the present subject disclosure a chroma pixel, a chroma sample, or for the sake of simplicity a pixel). Two channel types may also be distinguished for a pixel: a luma channel type, corresponding to the luma component of the pixel, and a chroma channel type, jointly designating the chroma components of the pixel. The chroma channel type pixel may itself be divided into the blue-difference (Cb) chroma component and the red-difference (Cr) chroma component. In the following, the term "pixel" may be used to refer, depending on the embodiment and on the image to which it pertains (which may be a YCbCr image, a component image, a chroma component image, a luma component image, etc.), to a pixel of an original image, a luma channel pixel, a chroma channel pixel, a Cb pixel, a Cr pixel, a chroma component pixel, a luma component pixel, a chroma sample, a luma sample, etc.

In the following, the term "plane" may be used to refer to, depending on the embodiment, a color space, a channel type, or a component of the pixel to which all or part of the proposed method may be applied. For example, processing a pixel in the luma plane may correspond to processing a luma component of the pixel (typically associated with a so-called "luminance plane", referred to as the "Y" plane), while processing the pixel in a chroma plane may correspond to processing a chroma component of the pixel (two chrominance planes being generally used and referred to as the "U" and "V" planes, or "Cb" and "Cr" planes). In the following, unless stated otherwise, an operation described as applicable to a pixel may be applied to any pixel component, whether chroma or luma, that is, regardless of whether the pixel represents a luma component or a chroma component of a three-color component pixel. In the following, some embodiments of the proposed methods, apparatuses and computer programs are described for the exemplary processing of pixels of an image in the Y, Cb, and/or Cr planes. However, it will be appreciated by those having ordinary skill in the relevant art that other color spaces, such as, for example, the YUV, Y'CbCr, or RGB color spaces, may be used in place of or in addition to the set of YCbCr color spaces, which is given by way of example only according to embodiments of the present subject disclosure.

The proposed methods may be implemented by any video encoder, video decoder, or video codec configured for encoding and/or decoding images (or frames) of input video data using predictive coding exploiting spatial redundancies of pixel blocks in images of the input video data (e.g. intra prediction video coding), such as, for example a video encoder and/or decoder compliant with the any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions, as the case may be adapted for implementing one or more embodiments of the proposed methods.

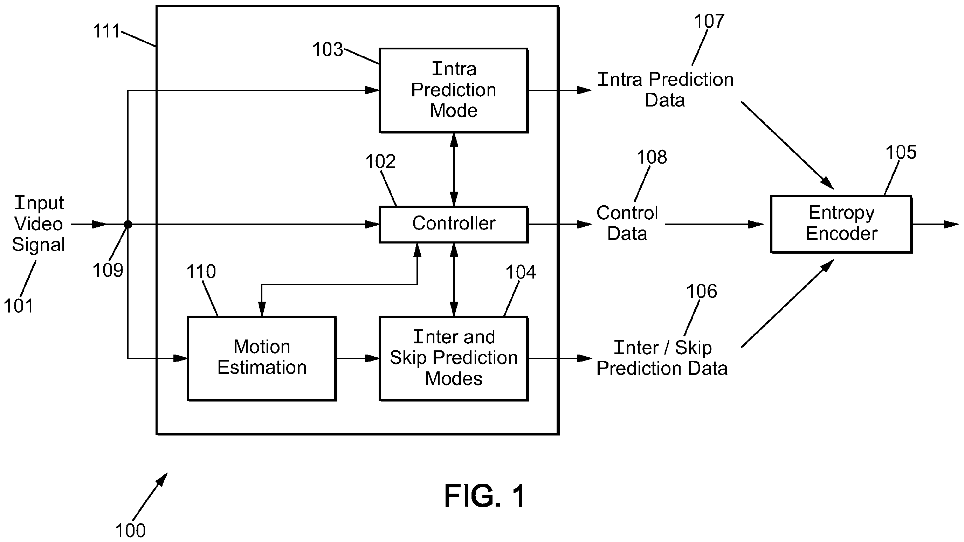

Shown on Fig. 1 is a video encoder 100 that receives at input 109 an input video stream 101 that includes a plurality of images (or frames) to be processed for the encoding of the input video stream. The video encoder includes a controller 102, operatively coupled with the input interface 109, configured for controlling the operations of a motion estimation unit 110 and an inter prediction encoding unit 104, as well as an intra prediction encoding unit 103. Data received on the input interface 109 are transmitted to the motion estimation unit 110, to the inter prediction encoding unit 104, to the intra prediction encoding unit 103, and to the controller 102. Together with the controller 102, the motion estimation unit 110, the inter prediction encoding unit 104, and the intra prediction encoding unit 103 form an encoding unit 111 which is operatively coupled to the input interface 109.

The intra prediction encoding unit 103 generates intra prediction data 107 which are inputted to an entropy encoder 105. The motion estimation unit 110 generates motion estimation data 106 which are provided to the controller 102 as well as to the inter prediction encoding unit 104 for inter prediction encoding. The inter prediction encoding unit 104 generates inter prediction data which are inputted to the entropy encoder 105. For example, in some embodiments, data provided to the decoder for an inter prediction encoding may include pixel residuals and information related to one or more motion vectors. Such information related to one or more motion vectors may include one or more indices that each identifies a prediction vector in a list of prediction vectors known to the decoder. Data provided to the decoder for a skip prediction mode may typically not include any pixel residual, and may also include one or more indices that each identifies a prediction vector in a list of prediction vectors known to the decoder. The list of prediction vector used for inter prediction encoding may not be identical to the list of prediction vectors used for skip prediction encoding.

The controller 102 generates control data which may also be provided as input data to the entropy encoder 105.

In one or more embodiments, an image undergoing processing is typically divided into blocks or coding units, the form and size of which may be determined based on the size of the pixel matrix that corresponds to the image, for example into square-shaped macroblocks of size 16 x 16 pixels. These blocks can form a set of blocks, corresponding to a partition of the image, for which a processing sequence may be defined that represents the order in which the blocks of the set are to be processed (e.g., encoded or compressed). In the exemplary case of square-shaped blocks of equal sizes, the processing sequence may define a processing order according to which the block located at the leftmost upper corner of the pixel matrix is processed first, followed by the block located immediately to the right of the previous block, until the block at the end of the upper line of blocks (that is, the block located at the rightmost upper corner of the pixel matrix) is processed, followed by the block located at the leftmost on the line immediately below the upper line of blocks, followed by the blocks of this second line processed from left to right, and so on until the block located at the rightmost lower corner of the pixel matrix, which is processed last.

One may therefore consider a so-called "current block," that is, a block being under processing in the current image. In some embodiments, the processing of the current block may include subdividing the current block into sub-blocks, so that the block may be processed with a finer spatial granularity. The processing of a block may also include a predicting of the pixels of the block, using spatial correlations (within the same image) or temporal correlations (in previously processed images) among pixels. In embodiments where a plurality of prediction type may be used, such as an intra prediction, an inter prediction, and/or a skip prediction, implemented in the encoder, the prediction of the block pixels typically includes a selection of a prediction type, and the generation of prediction data that correspond to the selected prediction type, which may form, together with prediction type selection data, a set of encoding parameters.

A video encoder using prediction coding, whether it is spatial prediction coding (e.g. intra prediction) or temporal prediction coding (e.g. inter or skip prediction), will typically include a decoder unit, or pixel reconstruction unit (not represented on Fig. 1), configured for generating reconstructed pixels, from the reconstructing of pixels that have been encoded, which reconstructed pixels are used for the prediction of pixels of a current block (i.e. pixels of a block being encoded).

In some embodiments, the prediction of the block under processing may comprise a calculation of pixel residuals, which respectively correspond to a gap, or distance, or difference, between pixels of the current block and corresponding pixels of a prediction block. The pixel residuals may be transmitted to the decoder in some embodiments after transform and quantization.

Different encoding modes may therefore be available for the encoding of a current block, so that encoding information 106 - 108 may be included in the data generated by the encoder further to the encoding of the current block. Such encoding information may for example comprise information on a coding mode (e.g. information indicating the type of prediction, among intra, inter, and skip, or among intra and inter) used for encoding the current block, information on the partitioning of the current block into sub-blocks, as the case may be, motion estimation information in the case of a prediction of the inter or skip type, and/or intra prediction mode information 107 in the case of a prediction of the intra type.

Examples of intra prediction modes are described hereinafter in order to assist the understanding of the proposed method according to the present subject disclosure.

As discussed above intra prediction encoding of a current image typically involves predicting pixels of a block (or set) of pixels undergoing processing using previously encoded pixels in the current image. Different intra prediction modes may be used, of which some are described in the following:

In the so-called "Discrete Continuous" (DC) intra prediction mode, values of neighboring pixels of the current block that belong to previously encoded blocks are used to calculate a mean value of these neighboring pixel values. The prediction block is then built using for each pixel the calculated mean value.

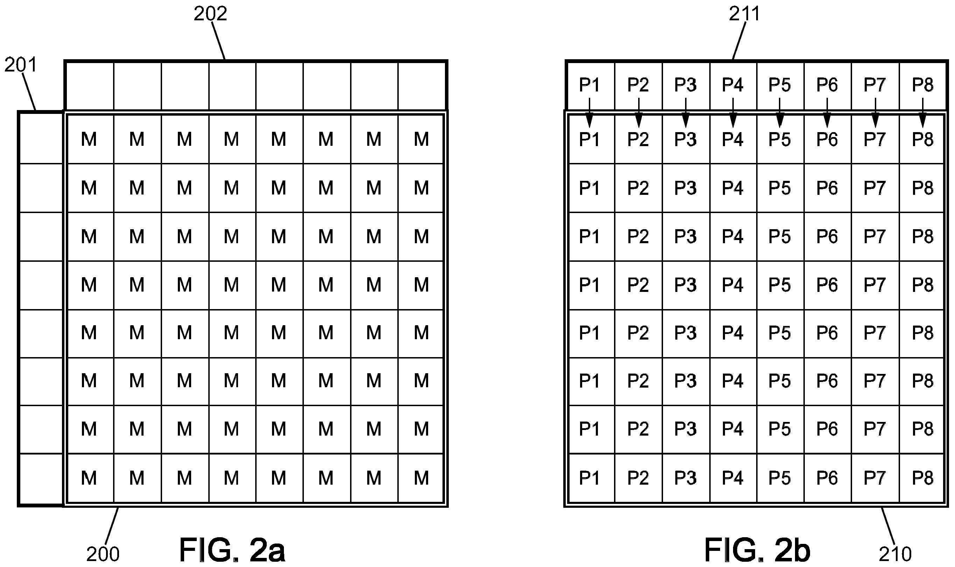

For example, for a prediction block 200 of 8 x 8 pixels as that illustrated on Fig. 2a, two sets of 8 neighboring pixels 201, 202 that respectively belong to the neighboring block located on the left of the current block and to the neighboring block located above the current block, may be used to calculate a mean value M of the values of these 16 pixels. The calculated mean value is used to fill the pixels of the prediction block 200, that is, the calculated mean value M is assigned as value of each of the pixels of the prediction block 200.

In the so-called "Vertical" (V) intra prediction mode, values of previously encoded neighboring pixels located above the current block are used, and each pixel of the prediction block is assigned the value of the neighboring pixel located in the same column.

For example, for a block 210 of 8 x 8 pixels as that illustrated on Fig. 2b, the set of 8 neighboring pixels 211 that belong to the neighboring block located immediately above the current block, may be used to fill the pixels of the prediction block 210, assuming that the 8 neighboring pixels 211 have been previously encoded. As shown on Fig. 2b, each pixel of the prediction block 210 takes the value of the one of the 8 neighboring pixels 211 located in the same column as the pixel, and the 8 neighboring pixels 211 are distributed in the prediction block 200 according to a vertical prediction direction.

In the so-called "Horizontal" (H) intra prediction mode, values of previously encoded neighboring pixels located on the left of the current block are used, and each pixel of the prediction block is assigned the value of the neighboring pixel located on the same line as the pixel.

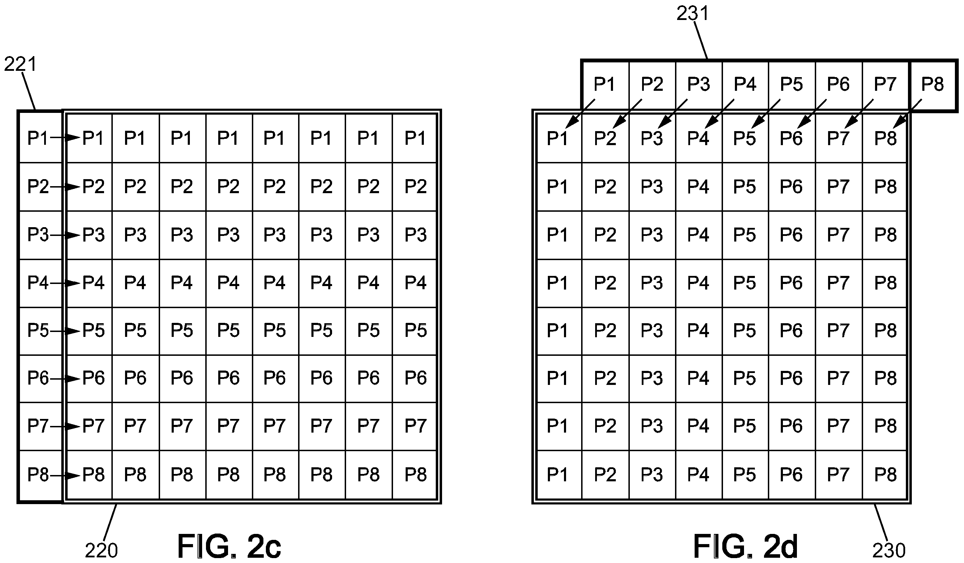

For example, for a block 220 of 8 x 8 pixels as that illustrated on Fig. 2c, the set of 8 neighboring pixels 221 that belong to the neighboring block located on the left of the current block, may be used to fill the pixels of the prediction block 220, assuming that the 8 neighboring pixels 221 have been previously encoded. As shown on Fig. 2c, each pixel of the prediction block 220 takes the value of the one of the 8 neighboring pixels 221 located on the same line as the pixel, and the 8 neighboring pixels 221 are distributed in the prediction block 220 according to a horizontal prediction direction.

In the so-called "Vertical-Left" (VL) intra prediction mode, values of previously encoded neighboring pixels located above the current block with a one-pixel shift to the right as compared to a line of pixels of the current block are used, and each pixel of the prediction block is assigned the value of the neighboring pixel located above with a one-pixel shift to the right from the pixel of the block located on the upper line of the block and on the same column as the pixel.

For example, for a block 230 of 8 x 8 pixels as that illustrated on Fig. 2d, the set of 8 neighboring pixels 231 located above the current block 230 with a one-pixel shift to the right as compared to a line of pixels of the current block 230, may be used to fill the pixels of the prediction block 230, assuming that the 8 neighboring pixels 231 have been previously encoded. As shown on Fig. 2d, each pixel 232a of the prediction block 230 takes the value of the one 232b of the 8 neighboring pixels 231 located above with a one-pixel shift to the right from the pixel 232c of the block located on the upper line of the block and on the same column as the pixel 232a, and the 8 neighboring pixels 231 are distributed in the prediction block 230 according to a vertical left prediction direction.

In the so-called "Vertical-Right" (VR) intra prediction mode, values of previously encoded neighboring pixels located above the current block with a one-pixel shift to the left as compared to a line of pixels of the current block are used, and each pixel of the prediction block is assigned the value of the neighboring pixel located above with a one-pixel shift to the left from the pixel of the block located on the upper line of the block and on the same column as the pixel.

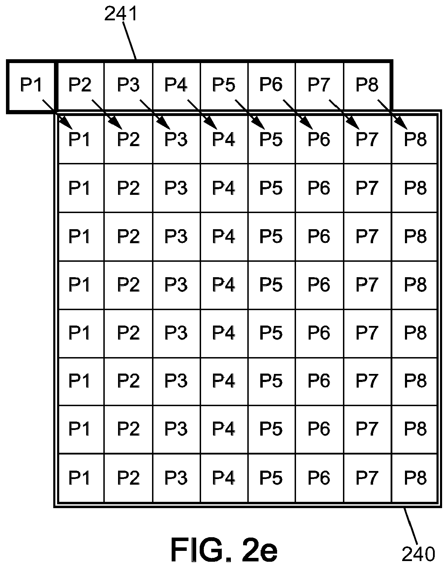

For example, for a block 240 of 8 x 8 pixels as that illustrated on Fig. 2e, the set of 8 neighboring pixels 241 located above the current block 240 with a one-pixel shift to the left as compared to a line of pixels of the current block 240, may be used to fill the pixels of the prediction block 240, assuming that the 8 neighboring pixels 241 have been previously encoded. As shown on Fig. 2e, each pixel 242a of the prediction block 240 takes the value of the one 242b of the 8 neighboring pixels 241 located above with a one-pixel shift to the left from the pixel 242c of the block located on the upper line of the block and on the same column as the pixel 242a, and the 8 neighboring pixels 241 are distributed in the prediction block 240 according to a vertical right prediction direction.

Nine intra prediction modes have been specified for the H.264/MPEG-4 AVC video coding standard (including the above-described DC, H, V, VL, VR, HL, and HR intra prediction modes), including a DC prediction mode and 8 directional modes. The HEVC video coding standard supports 35 intra prediction modes, including a planar prediction mode, a DC prediction mode, and 33 directional modes. The VVC video coding standard supports 67 intra prediction modes, including a planar prediction mode, a DC prediction mode, and 65 directional modes.

Information on the selected intra prediction mode may also be predicted so as to reduce its coding cost. Indeed, the cost of transmission in the encoded data stream of an index identifying the selected intra prediction mode would otherwise increase with the number of supported intra prediction modes. Even in the case of the H.264/MPEG-4 AVC video coding standard, transmitting an index $i \in \{1; 2; 3; 4; 5; 6; 7; 8; 9\}$ that identifies for each block encoded with intra prediction the selected mode among the 9 intra prediction modes supported by the standard is generally considered too costly in terms of coding cost.

To this end, a "most probable mode" (MPM) may be determined and encoded using the lowest possible number of bits to be transmitted to the decoder. The MPM is generated by predicting the intra prediction mode used to encode the current block. As a consequence, in cases where the current block is encoded with intra prediction, only pixel residual information and MPM information may be included in the bitstream generated by the encoder to be transmitted to the decoder after quantization and entropy coding.

However, even though the MPM may be used to lower the coding cost of information related to the selected intra prediction mode, an estimated 4% to 15% of the total bitstream generated at the output of an HEVC encoder corresponds to prediction mode information necessary for the decoding of the encoded video data. Therefore it has been deemed desirable to decrease such proportion of control information in the bitstream generated at the output of the encoder, in particular for applications which require the transmission, including wireless transmission, of such control information as included in the encoded bitstream, to the decoder.

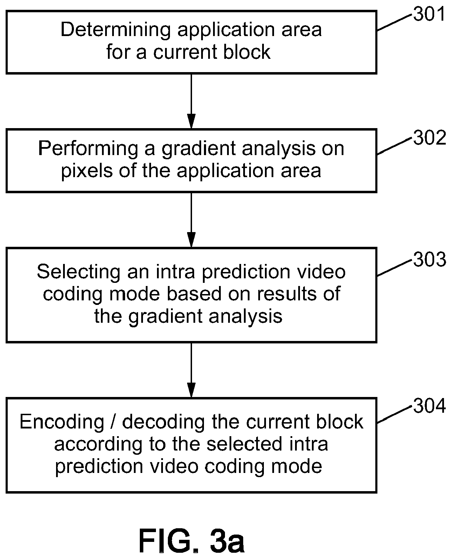

Fig. 3a is a block schematic diagram of a so-called "baseline DIMD" method of processing an image that may be used according to embodiments of the present subject disclosure.

As discussed above, in some embodiments of the baseline DIMD scheme the image (which, depending on the embodiment, may for example be a YCbCr image, a Y image (luma component image), a Cr and/or Cb chroma component image) may be divided into a plurality of pixel blocks, which may or may not be of equal size or of same shape, for purposes of encoding the image through encoding of the blocks according to a processing sequence defined based on the partitioning of the image into blocks.

In one or more embodiments of the baseline DIMD, for a current pixel block being encoded, a so-called "application area" may be determined (301) as a set of pixels, for example neighboring pixels of pixels of the current pixel block. In some embodiments, the application area may be a set of pixels in blocks preceding the current block in the processing sequence. In some embodiments where the encoding of blocks involves the decoding, at the encoder, of previously encoded blocks, the application area may be chosen to comprise a plurality of pixels belonging to blocks that have already been encoded (and therefore decoded).

Then a gradient analysis may be performed (302) on at least one pixel of the application area. Depending on the embodiment of the baseline DIMD, the gradient analysis may be performed on one or several pixels of the application area, or each pixel of the application area. Therefore, the application area may be determined so as to perform a gradient-based analysis (e.g. of texture) on one or more pixels of the application area.

In some embodiments, the application area may be determined under a constraint, such as, for example, that it comprises a set of pixels in blocks preceding the current block in the processing sequence. Various other constraints and parameters may be defined so as to determine an application area that is suitable for the gradient-based analysis which is performed for the current pixel block, examples of which are provided below.

In some embodiments, the gradient analysis may comprise the computing of one or more gradients for one or several, or depending on the embodiment of the baseline DIMD scheme, each pixel of the application area. In some embodiments, the computed gradient(s) may represent a directional intensity change at the corresponding pixel. In some embodiments of the baseline DIMD scheme, the gradient(s) may be computed as part of an edge detection processing performed, at the encoder side and/or at the decoder side, on decoded or reconstructed pixels, according to one or several edge detection algorithms.

According to the baseline DIMD scheme, an intra prediction video coding mode may be selected (303), among a plurality of intra prediction video coding modes for processing the current block, based on the gradient analysis. For example, the intra prediction video coding mode may be selected based on at least one of computed gradients. Because each of the computed gradients provides information on an edge orientation at the corresponding pixel, the plurality of intra prediction video coding modes may in some embodiments of the baseline DIMD scheme be chosen to correspond to the directional intra prediction video coding modes supported by the encoder for encoding the current block, and by the decoder for decoding the encoded pixels of the block. For example, in the case of an H.264/MPEG-4 AVC video codec, an intra prediction video coding mode may be selected among the 9 intra prediction modes supported by the AVC codec, based on at least one of the computed gradients. In the exemplary case of a HEVC video codec, an intra prediction video coding mode may be selected among the 35 intra prediction modes supported by the HEVC codec, based on at least one of the computed gradients. In the exemplary case of a VVC video codec, an intra prediction video coding mode may be selected among the 67 intra prediction modes supported by the VVC codec, based on at least one of the computed gradients

The current block may then be processed (304) that is, for example, encoded at the encoder side, or decoded at the decoder side, according to the selected intra prediction video coding mode.

The baseline DIMD scheme can therefore significantly reduce the bandwidth required for transmission to a decoder of encoded data, as there is no longer a need to include in such encoded data data related to the selected intra mode, but instead merely data signaling to the decoder that the DIMD scheme should be used to decode the current block. Indeed, a decoder may also be configured to used the same DIMD scheme as that used at the encoder side, and therefore may be configured to derive the same intra prediction mode

According to embodiments of the present subject disclosure, the DIMD scheme used at both an encoder and a decoder configured for using such DIMD scheme for deriving the same intra prediction mode may be configured so that it leads to the same intra prediction mode. This advantageously can be achieved since most encoders include a decoder, so that an encoder and a decoder can be configured to process the same image data in the process of performing a DIMD scheme.

Referring again to Fig. 3a, a decoder configured for performing a method according to the baseline DIMD scheme may be configured, for a processing comprising a decoding of an image divided into a plurality of pixel blocks, the decoder being configured for decoding the image by sequentially decoding the pixel blocks according to a processing sequence to determine for a current pixel block an application area consisting of a set of pixels in blocks preceding the current block in the processing sequence, perform a gradient analysis on at least one pixel of the application area, and to select, based on results of the gradient analysis, an intra prediction video coding mode among a plurality of intra prediction video coding modes usable for encoding the current block. In some embodiments of the baseline DIMD, the decoder may be configured to compute for one or more pixels, or depending on the embodiment of the baseline DIMD, each pixel of the application area, a gradient representing an edge intensity level and an edge orientation at the pixel, and to select, based on at least one of the computed gradients, an intra prediction video coding mode among a plurality of intra prediction video coding modes usable for encoding the current block.

Depending on the embodiment of the baseline DIMD, the processing sequence at the encoder (encoding sequence) may or may not be identical to the processing sequence at the decoder (decoding sequence), provided that the processing sequence is designed so that the encoder and the decoder may process pixel(s) of the same application area for each processed current block.

A video decoder may then be configured for, using the DIMD processing scheme, autonomously selecting an intra prediction video coding mode, which may then be used for decoding the current block.

The baseline DIMD scheme may therefore be performed autonomously at the encoder and at the decoder, and merely requires that control information indicating that the proposed method has been used by the encoder for a current block be provided to the decoder. The decoder may be configured for, upon receipt of such control information, performing the proposed method for selecting an intra prediction video coding mode to be used for decoding of the current block.

For these reasons, the baseline DIMD scheme may also be viewed and implemented as a new encoding mode, along other conventional encoding modes, such as, for example, the intra encoding mode, the inter encoding mode, the skip encoding mode, etc.

Therefore, according to embodiments of the baseline DIMD scheme, a single prediction mode of a current block may be computed based on its neighboring texture, using a gradient-based scheme. The baseline DIMD scheme may be used at the encoder and at the decoder, so that the need for signaling the prediction mode for the current block may be alleviated.

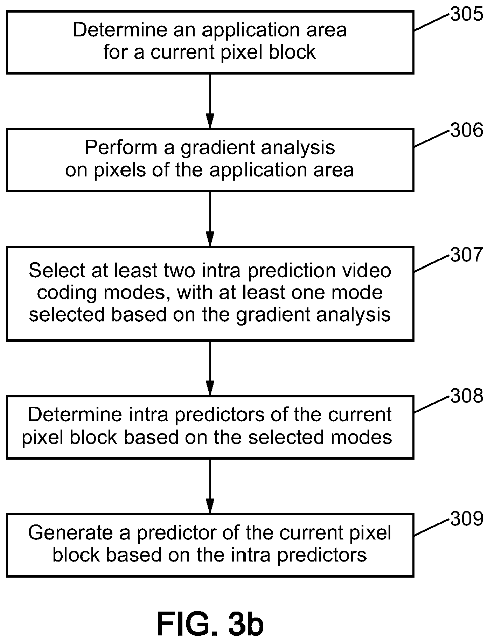

Fig. 3b is a block schematic diagram of a method of processing an image according to a so-called "extended DIMD" scheme.

As described above with respect to the baseline DIMD scheme, an image to be processed according to embodiments of the proposed method may be divided into a plurality of pixel blocks, which pixel blocks are processed according to a processing sequence for purposes of encoding the image through encoding of the blocks according to the processing sequence.

Likewise the baseline DIMD scheme, in one or more embodiments of the extended DIMD scheme, for a current pixel block being encoded, a so-called "application area" or "template" may be determined (305), as a set of pixels on which a gradient-based analysis is performed. In some embodiments, the application area may be a set of pixels in blocks preceding the current block in the processing sequence. In some embodiments where the encoding of blocks involves the decoding, at the encoder, of previously encoded blocks, the application area may be chosen to comprise a plurality of pixels belonging to blocks that have already been encoded (and therefore decoded).

In some embodiments of the extended DIMD scheme, the application area may be limited to one pixel. In other embodiments of the extended DIMD scheme, the application area may comprise several pixels.

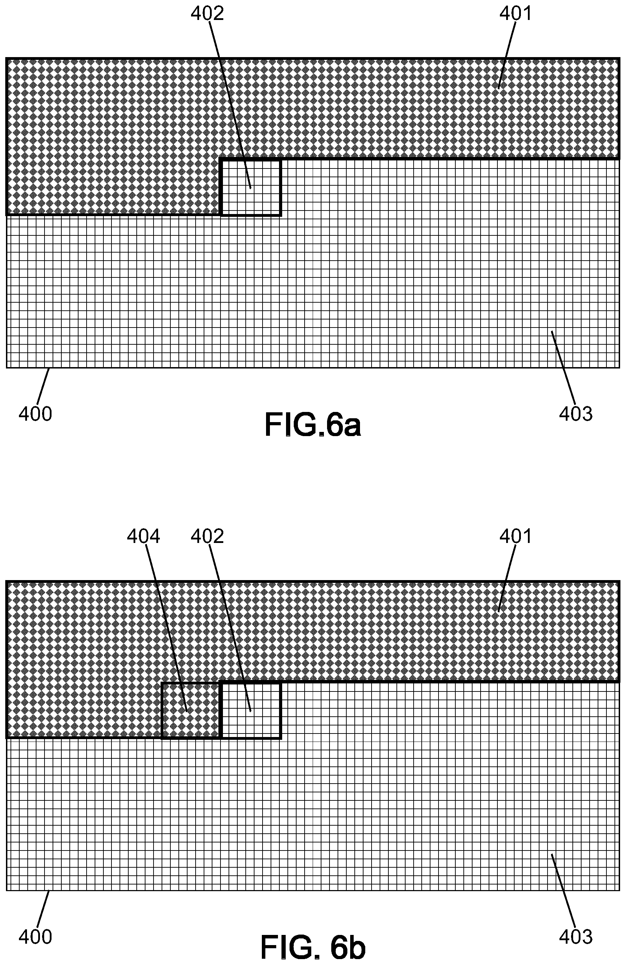

The pixel(s) of the application area may be chosen to be pixels located immediately around the current pixel blocks, as discussed below and illustrated in Figs. 6a and 6b. In some embodiments, the number of pixels of the application area may be dynamically chosen based on the size (number of pixels) of the current pixel block to be processed.

A gradient analysis may be performed (306) on at least one pixel of the application area. Depending on the embodiment, the gradient analysis may be performed on one or several pixels of the application area (in the cases where the application area comprises a plurality of pixels), or on all of the pixels of the application area.

Likewise the baseline DIMD scheme, in one or more embodiments of the extended DIMD scheme, the gradient analysis may comprise the computing of a gradient for one or several, or depending on the embodiment, each pixel of the application area. In some embodiments of the extended DIMD scheme, the computed gradient(s) may represent a directional intensity change at the pixel. In some embodiments, the gradient may be computed as part of an edge detection processing performed, at the encoder side and/or, at the decoder side, on decoded or reconstructed pixels, according to one or several edge detection algorithms.

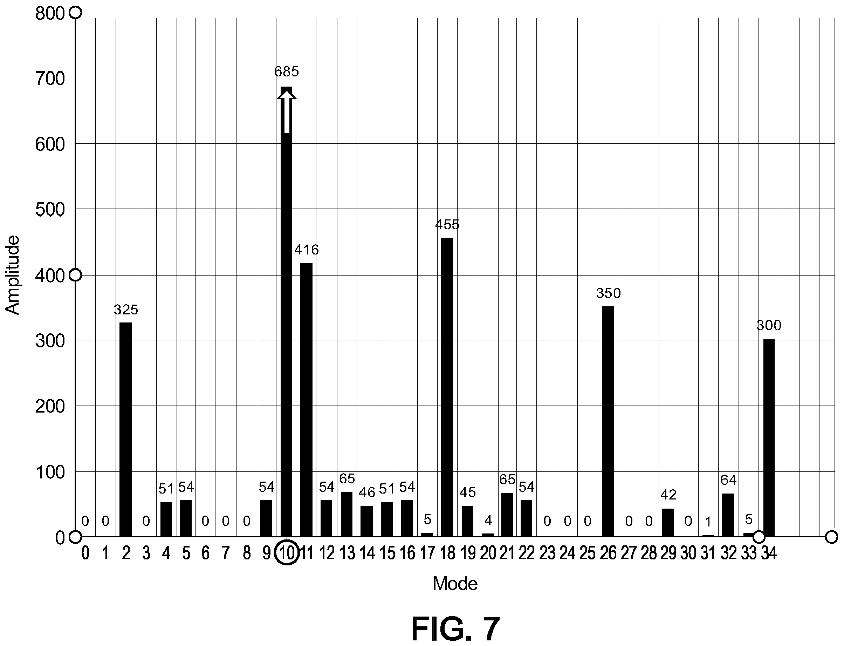

For example, a gradient may be computed for each pixel of the application area. In the exemplary case of a current pixel block of size 16 (4x4) pixels, the application area may be chosen to comprise 9 pixels located on the left and upper edges of the current pixel block that have already been decoded (as part of the encoding process). Nine gradient values may then be computed, one for each of the 9 pixels of the application area. In the cases where the application area comprises more than 9 pixels for a size 16 current block, such as illustrated on Fig. 7a (current pixel block (702) of size 16 pixels, and application area (701) of 33 pixels), nine gradient values may still be computed, based on the pixels of the application area.

In one or more embodiments of the extended DIMD scheme, a plurality of intra prediction video coding modes may be selected (307), among intra prediction video coding modes for encoding the current block. Among the selected intra prediction video coding modes, at least one mode may be selected based on the gradient analysis.

In some embodiments of the extended DIMD scheme, the at least one intra prediction video coding mode selected based on the gradient analysis may be selected based on at least one of computed gradients. Because each of the computed gradients provides information on an edge orientation at the corresponding pixel, some or all of the at least one intra prediction video coding mode(s) may in some embodiments of the extended DIMD scheme be chosen to correspond to the directional intra prediction video coding modes supported by the encoder for encoding the current block, and by the decoder for decoding the encoded pixels of the block. For example, in the case of a VVC video codec, at least one intra prediction video coding mode may be selected among the 67 intra prediction modes supported by the VVC codec, based on at least one of the computed gradient(s).

Depending on the embodiment of the extended DIMD scheme, the at least two selected intra prediction video coding modes may be selected using the baseline DIMD scheme, that is, based on the gradient analysis, or one of the two selected intra prediction video coding modes may be selected using another scheme, such as a rate distorsion optimization scheme, while at least one of the selected intra prediction video coding modes may be selected using the baseline DIMD scheme. Alternatively, the at least two selected intra prediction video coding modes may be selected using two different DIMD schemes.

That is, at least two intra prediction video coding modes may be selected among a plurality of intra prediction video coding modes usable for processing (for example, encoding and/or decoding) the current pixel block, with at least one mode being selected using the baseline DIMD scheme, that is, based on the gradient analysis, and one or more modes being selected using the baseline DIMD scheme or other intra prediction video coding mode selection schemes.

In some embodiments of the extended DIMD scheme, several intra prediction video coding modes may be selected using the baseline DIMD scheme. In such cases, the application area may be chosen to comprise a plurality of pixels, and the gradient analysis performed on the application area may be performed by computing a plurality of gradient values respectively corresponding to pixels, or groups of pixels, of the application area.

In other embodiments of the extended DIMD scheme, only one intra prediction video coding mode may be selected using the baseline DIMD scheme. In such case, the application area may be chosen to comprise one or more pixels, and the gradient analysis performed on the application area may be performed by computing a gradient value for at least one pixel of the application area.

In some embodiments of the extended DIMD scheme, all the modes may be selected according to the baseline DIMD scheme, that is, based on a gradient analysis, whereas in other embodiments, the selected modes may be a mix of selections according to the baseline DIMD scheme and other schemes which do not use a gradient analysis.

In one or more embodiments of the extended DIMD scheme, predictors of the current pixel block may then be determined (308) based on the selected intra prediction video coding modes. In some embodiments, the predictors may be computed using the selected intra prediction video coding modes. In some embodiments, a plurality of respective predictors may be determined in correspondence with the at least two selected intra prediction video coding modes, for example as described above in connection with Figs. 2a - 2e. For each of the selected intra prediction video coding modes, a corresponding predictor of the current pixel block may be determined according to the mode.

In one or more embodiments of the extended DIMD scheme, a (so called "final block") predictor of the current pixel block may be generated (309) based on the determined predictors.

In some embodiments of the extended DIMD scheme, the final block predictor of the current pixel block may be determined by combining the predictors, possibly using weigths respectively associated with the predictors.

The extended DIMD scheme may therefore be viewed as an extension of the baseline DIMD scheme, an embodiment of which is illustrated by Fig. 3a, as at least one of the intra prediction video coding mode may be selected based on a gradient analysis which was initially introduced with the baseline DIMD scheme.

The current pixel block may then be processed that is, for example, encoded at the encoder side, or decoded at the decoder side, according to the generated final block predictor.

According to embodiments of the extended DIMD scheme, a prediction mode of a current block may be computed based on the combination of a plurality of modes, at least one of them being computed based on its neighboring texture using a gradient-based scheme, that is, being computed using the baseline DIMD scheme. The extended DIMD scheme may be used at the encoder and at the decoder, so that the need for signaling the prediction mode for the current block may be alleviated.

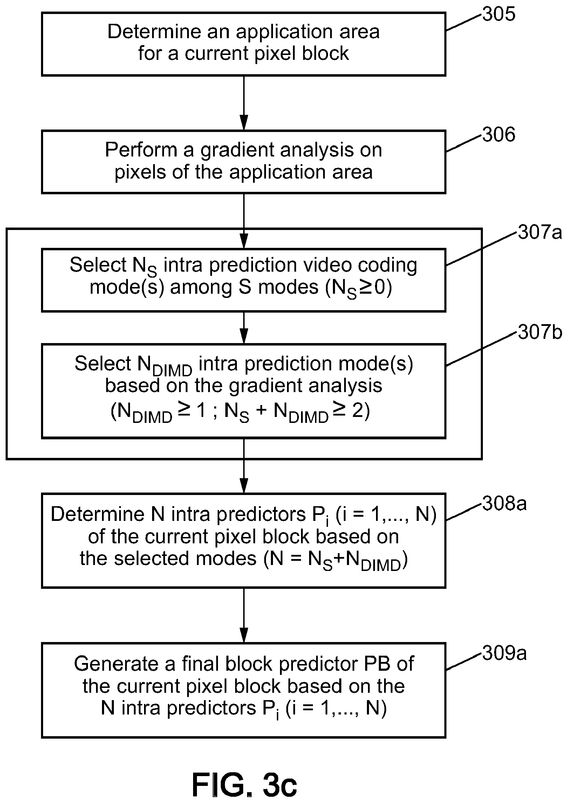

Reference is now made to Fig. 3c, which is a block schematic diagram of the extended DIMD method of processing an image.

As described above with reference to Fig. 3b, an image to be processed according to embodiments of the extended DIMD method may be divided into a plurality of pixel blocks, which pixel blocks are processed according to a processing sequence (e.g. for purposes of encoding the image through encoding of the blocks according to the processing sequence). In addition, in one or more embodiments of the extended DIMD method, for a current pixel block being encoded, an application area, for example comprising a set of at least one pixel in blocks preceding the current block in the processing sequence, may be determined (305) and a gradient analysis may be performed (306) on at least one pixel of the application area.

The selection of intra prediction video coding modes may in some embodiments of the extended DIMD method be divided into the selection (307a) of $N_s$ ($N_s \geq 0$) intra prediction video coding mode(s) among S intra prediction video coding modes usable for processing the current pixel block, using any selection method, such as, for example, a rate distortion optimization mode selection, on the one hand, and the selection (307b) of $N_{DIMD}$ intra prediction video coding mode(s) based on the gradient analysis ($N_{DIMD} \geq \max(2\text{-}N_s, 1)$) on the other hand. $N_{DIMD}$ may be chosen greater or equal to $\max(2\text{-}N_s, 1)$ in order to ensure that at least one intra prediction video coding mode is selected based on the gradient analysis, and that at least two modes are selected, that is, the total number of selected modes ($N=N_s+N_{DIMD}$) is greater or equal to 2. Based on the N selected intra prediction video coding modes, N predictors $P_i$ (i=1... N) may then be determined (308a), and a final block predictor $P_B$ may be generated (309a) based on the N predictors $P_i$ (i=1... N).

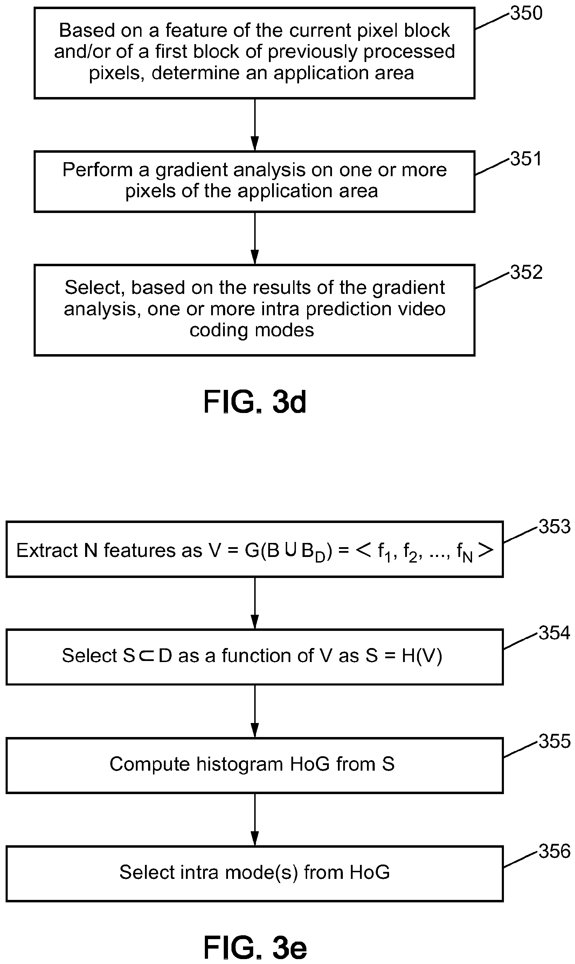

Fig. 3d is a block schematic diagram of a method of processing an image according to a so-called "sparse DIMD" scheme.

As described above with respect to the baseline DIMD scheme and the extended DIMD scheme, an image to be processed according to embodiments of the sparse DIMD scheme may be divided into a plurality of pixel blocks, which pixel blocks are processed according to a processing sequence (e.g. for purposes of encoding the image through encoding of the blocks according to the processing sequence).

The pixel blocks may or may not be of equal size or of same shape. The pixel blocks of the image may each be any set of pixels of the image, and may be chosen so that the set of blocks forms a partition of the image, that is, each pixel of the image belongs to only one block.

In the H.264/MPEG-4 AVC standard, a picture may be divided into so-called "macroblocks" of 16x16 pixels. Each macroblock can be split into multiple blocks depending on the coding mode selected at the macroblock level. In intra, a macroblock can be split into four 8x8 blocks, or sixteen 4x4 blocks.

In HEVC, a picture may be divided into so-called Coding Tree Units (CTU). The size of the CTU is fixed for an entire sequence, and is signaled in the Sequence Parameter Set (SPS). It can vary between 8x8 and 64x64. Each CTU can later be split into 4 Coding Units (CU), and each CU can be further split into 4 smaller CUs, and so on, until a maximum CU depth is reached (CU size varies between 8x8 and 64x64).

The pixel values of each block may correspond, depending on the block, to luma sample values, or to chroma sample values. For example, the H.264/MPEG-4 AVC video coding standard uses so-called "macroblocks", each macroblock comprising a 16 x 16 block of luma samples, and two corresponding 8 x 8 blocks of chroma samples for 4:2:0 color sampling.

The processing sequence for processing, at the image processor (for example at the encoder or at the decoder), the blocks of the image may define a sequence according to which blocks are processed (e.g. encoded) one after another. Because the blocks of the image may be encoded at an encoder according to a predetermined sequence, the encoded blocks may be decoded at the decoder according to the same processing sequence. For example, a raster scan sequence may scan the blocks of the image starting from the block located at the leftmost upper corner of the image (represented by a pixel matrix), and progress to the block adjacent to the previously scanned block located to the right. At the end of a line of block, the sequence proceeds to the next line scanning the blocks from the left to the right. Blocks sub-divided into sub-blocks may be scanned in the same manner.

In one or more embodiments, for a current pixel block being encoded, an application area, for example comprising a set of pixels in at least one second block preceding the current pixel block in the processing sequence, may be determined (350) based on at least one feature of the current pixel block and/or of at least one first block preceding the current pixel block in the processing sequence. In some embodiments, the application area may be a set of pixels selected in blocks preceding the current block in the processing sequence. In some embodiments where the encoding of blocks involves the decoding, at the encoder, of previously encoded blocks, the application area may be chosen to comprise a plurality of pixels belonging to blocks that have already been encoded (and therefore decoded).

In some embodiments, the application area may be limited to one pixel. In other embodiments, the application area may comprise several pixels.

The pixel(s) of the application area may be selected in a set of pixels located immediately around the current pixel blocks, as discussed below and illustrated in Figs. 6a and 6b. In some embodiments, the number of pixels of the application area may be dynamically chosen based on one or more features of the current pixel block to be processed and/or of at least one first block preceding the current pixel block in the processing sequence.

Likewise the baseline DIMD and extended DIMD schemes, a gradient analysis may be performed (351) on at least one pixel of the application area. Depending on the embodiment, the gradient analysis may be performed on one or several pixels of the application area (in the cases where the application area comprises a plurality of pixels), or on all of the pixels of the application area.

Likewise the baseline DIMD and extended DIMD schemes, in one or more embodiments of the sparse DIMD scheme, the gradient analysis may comprise the computing of a gradient for one or several, or depending on the embodiment, each pixel of the application area. In some embodiments, the computed gradient(s) may represent a directional intensity change at the pixel. In some embodiments, the gradient may be computed as part of an edge detection processing performed, at the encoder side and/or, at the decoder side, on decoded or reconstructed pixels, according to one or several edge detection algorithms.

For example, a gradient may be computed for each pixel of the application area. In the exemplary case of a current pixel block of size 16 (4x4 pixels), the application area may be chosen to comprise 9 pixels located on the left and upper edges of the current pixel block that have already been decoded (as part of the encoding process). Nine gradient values may then be computed, one for each of the 9 pixels of the application area. In the cases where the application area comprises more than 9 pixels for a size 16 current block, such as illustrated on Fig. 7a (current pixel block (702) of size 16 pixels, and application area (701) of 33 pixels), nine gradient values may still be computed, based on the pixels of the application area.

In one or more embodiments of the sparse DIMD scheme, at least one intra prediction video coding modes may be selected (352), among intra prediction video coding modes for encoding the current block, based on the gradient analysis.

In some embodiments of the sparse DIMD scheme, the at least one intra prediction video coding mode selected based on the gradient analysis may be selected based on at least one of computed gradients. Because each of the computed gradients provides information on an edge orientation at the corresponding pixel, some or all of the at least one intra prediction video coding mode(s) may in some embodiments be chosen to correspond to the directional intra prediction video coding modes supported by the encoder for encoding the current block, and by the decoder for decoding the encoded pixels of the block.

Depending on the embodiment of the sparse DIMD scheme, the at least two selected intra prediction video coding modes may be selected using a baseline DIMD scheme or another DIMD scheme, that is, based on a gradient analysis, or one of the two selected intra prediction video coding modes may be selected using another scheme, such as a rate distorsion optimization scheme, while at least one of the selected intra prediction video coding modes may be selected using the baseline DIMD scheme.

That is, at least two intra prediction video coding modes may be selected among a plurality of intra prediction video coding modes usable for processing (for example, encoding and/or decoding) the current pixel block, with at least one mode being selected using the DIMD scheme, that is, based on the gradient analysis, and one or more modes being selected using the baseline DIMD scheme or other intra prediction video coding mode selection schemes.

In one or more embodiments, the sparse DIMD scheme may be implemented through a specific scheme for determining an application area, while the remaining of the sparse DIMD scheme (performing a gradient analysis, selecting at least one intra prediction mode) may correspond to operations described in reference to the baseline DIMD scheme or to the extended DIMD scheme. As a consequence, all embodiments described herein with respect to the performing a gradient analysis, calculating a histogram, selecting at least one intra prediction mode, and/or any operation other than the determination of an application area, may be used in one or more embodiments of the sparse DIMD scheme according to the present subject disclosure.

In one or more embodiments of the sparse DIMD scheme, the at least one feature based on which the application area is determined may comprise the width and/or the height of the current pixel block. That is, in some embodiments, the application area may be determined based on two features of the current pixel block: the width and the height of the current pixel block.

In one or more embodiments of the sparse DIMD scheme, the at least one feature based on which the application area is determined may comprise the width and/or the height of the at least one first block preceding the current pixel block in the processing sequence. That is, in some embodiments, the determination of the application area may be based on the width and/or height of one or more previously encoded blocks.

In some embodiments of the sparse DIMD scheme, the determination of the application area may be based on one or more features of the current pixel block, and one or more features of a previously encoded block.

In one or more embodiments of the sparse DIMD scheme, the at least one feature based on which the application area is determined may comprise at least one intra mode used for processing the at least one first block preceding the current pixel block in the processing sequence. In some embodiments of the sparse DIMD scheme, the application area may be determined based on the intra prediction mode used for encoding a previously encoded block.

The sparse DIMD scheme may therefore advantageously be used for the encoding of intra images in which blocks are encoded using intra prediction modes.

In one or more embodiments of the sparse DIMD scheme, the at least one feature based on which the application area is determined may comprise a plurality of intra modes respectively used for processing a plurality of first blocks preceding the current pixel block in the processing sequence. In some embodiments, the application area may be determined based on a plurality of intra prediction modes respectively used for encoding a plurality of previously encoded blocks. In such embodiments, the method may further comprise: comparing a distance between the intra prediction modes to a predetermined threshold, and determining the application area based on the comparison.

For example, a distance d between the intra prediction modes may be calculated, and then compared to a predetermined threshold $Th\_d$. In the case where $d \leq Th\_d$, the texture of the image around the current pixel block may be inferred as being uniform and simple, so that it may be decided to select a lesser number of pixels for the determination of the application area so as to lower the computation complexity associated with the gradient analysis. On the contrary, in the case where $d > Th\_d$, the texture of the image around the current pixel block may be inferred as being non uniform and complex, so that it may be decided to select a greater number of pixels for the determination of the application area so as to perform a more efficient, yet more complex, gradient analysis.

In other embodiments of the sparse DIMD scheme, the method may further comprise: determining whether the modes are identical or not, and determining the application area based on the determination of whether the modes are identical or not. Indeed, when the modes are identical, the texture of the image around the current pixel block may be inferred as being uniform and simple, so that it may be decided to select a lesser number of pixels for the determination of the application area so as to lower the computation complexity associated with the gradient analysis, and when the modes are not identical, the texture of the image around the current pixel block may be inferred as being non uniform and complex, so that it may be decided to select a greater number of pixels for the determination of the application area so as to perform a more efficient, yet more complex, gradient analysis.

The sparse DIMD scheme may therefore be viewed as another (or further) extension of the baseline DIMD scheme (an embodiment of which is illustrated by Fig. 3a), referred to herein as "sparse DIMD", "DIMD sparsity", or "sparse DIMD with block-adaptivity," as the application area may not be determined statically, but instead dynamically based on one or more features of the current block and/or previously coded blocks, according to the sparse DIMD scheme.

The current pixel block may then be processed that is, for example, encoded at the encoder side, or decoded at the decoder side, according to the generated final block predictor.

The above-described DIMD schemes (baseline DIMD, extended DIMD, and sparse DIMD) may advantageously alleviate the need to transmit to the decoder information related to the at least one intra prediction video coding mode selected based on the gradient analysis, and used for encoding the current block, as the determination of an application area, the gradient analysis performed on the application area (in embodiments the computing of a gradient for at least one, or each pixel of the application area), and the selection of the at least one intra prediction video coding mode based on the gradient analysis, may be performed at the decoder in an autonomous manner, that is, without the need for any data related to the final block predictor generation in this regard performed at the encoder.

Therefore, an encoder configured for performing one of the DIMD schemes may be configured for performing the DIMD scheme on a current pixel block to generate a predictor of such current pixel block using at least one intra prediction video coding mode selected based on a gradient analysis, and a decoder configured for performing the proposed method may be capable of generating the same predictor using the same at least one intra prediction video coding mode selected based on a gradient analysis, for decoding the current block, based on its own processing performed at the decoder, thereby alleviating the need for said decoder to receive information specifying the at least one intra prediction video coding mode selected based on a gradient analysis used at the encoder for encoding the current block, such as, for example, an intra prediction video coding mode index for the at least one intra prediction video coding mode selected based on a gradient analysis.

In order to ensure that the encoder and decoder select the same at least one intra prediction video coding mode selected based on a gradient analysis, the encoder and the decoder may be configured in some embodiments of the used DIMD scheme to determine the same application area, in correspondence with the same current block, that is, at the encoder, a set of pixels to be encoded, and at the decoder, the same set of pixels in the pixel matrix corresponding to the image, to be decoded. The encoder and the decoder may also be configured in some embodiments of the used DIMD scheme to perform the same gradient analysis, based on the same one or more pixels of the application area.

Therefore, through the selection of at least one intra prediction video coding mode based on a gradient analysis (thus according to the baseline, extended or sparse DIMD scheme), each of the baseline, extended and sparse DIMD scheme advantageously provides a method for autonomously generating, at an encoder and at a decoder, a predictor, thereby eliminating the need to include, in the bitstream generated by the encoder, information related to the at least one intra prediction video coding mode selected based on the gradient analysis that was used for generating the final block predictor, for coding a current block of an image. This results in an improvement in the compression efficiency for a given bitrate, or in a decrease of the bitrate at the output of the encoder.

In addition, each of the extended and sparse DIMD schemes advantageously provides, through the use of a combining of several predictors for the same current pixel block, strong improvements as compared to the baseline DIMD scheme in performance in terms of bitrate gain for a given quality (for example expressed in PSNR - Peak Signal-to-Noise Ratio).

In one or more embodiments, a decoder configured for performing a method according to each of the baseline, extended and sparse DIMD scheme may be configured, for a processing comprising a decoding of an image divided into a plurality of pixel blocks, the decoder being configured for decoding the image by sequentially decoding the pixel blocks according to a processing sequence to determine for a current pixel block an application area comprising a set of at least one pixel in at least one second block preceding the current pixel block in the processing sequence, based on at least one feature of the current pixel block and/or of at least one first block preceding the current pixel block in the processing sequence, performing a gradient analysis on at least one pixel of the application area, and to select, based on results of the gradient analysis, at least one intra prediction video coding mode among a plurality of intra prediction video coding modes usable for encoding and/or decoding the current pixel block. In some embodiments, the decoder may be configured to compute for some of the pixels, or depending on the embodiment, all pixels of the application area, a gradient representing an edge intensity level and an edge orientation at the pixel, and to select, based on at least one of the computed gradients, at least one intra prediction video coding mode among a plurality of intra prediction video coding modes usable for decoding the current block.

Depending on the embodiment of the DIMD scheme, the processing sequence at the encoder (encoding sequence) may or may not be identical to the processing sequence at the decoder (decoding sequence), provided that the processing sequence is designed so that the encoder and the decoder may process pixel(s) of the same application area for each processed current block.

The video decoder may then be configured for, using the DIMD scheme, determining intra predictors of the current block based on the at least two intra prediction video coding modes selected at the decoder, and generating a prediction of the current pixel block based on the intra predictors, which may then be used for decoding the current block.

The DIMD scheme may therefore be performed autonomously at the encoder and at the decoder with respect to the selection of at least one intra prediction video coding mode based on a gradient analysis, and merely requires in such respect that control information indicating that the proposed method has been used by the encoder for a current block be provided to the decoder. The decoder may be configured for, upon receipt of such control information, performing the proposed method for selecting at least one intra prediction video coding mode based on a gradient analysis to be used for decoding of the current block.

One or several of the baseline DIMD scheme, extended DIMD scheme and sparse DIMD scheme may be implemented as a new encoding mode, or as part of a DIMD encoding mode. That is, a baseline DIMD encoding mode, extended DIMD encoding mode and/or a sparse DIMD encoding mode may be defined to use the corresponding DIMD scheme. For example, three DIMD encoding modes may be defined: one for the baseline DIMD scheme, one for the extended DIMD scheme, and one for the sparse DIMD scheme.

An encoder configured to use one or several of the baseline, extended and sparse DIMD schemes for a current block of an image to be encoded, and as a consequence to autonomously select at least one intra prediction video coding mode based on a gradient analysis for the encoding of the current block, may in some embodiments be further configured to include, in the output bitstream, control data (e.g. a flag) indicating that the corresponding encoding mode (depending on the embodiment, one of the baseline DIMD encoding mode, extended DIMD encoding mode, and/or sparse DIMD encoding mode) has been used for encoding the current block. Alternatively, the baseline, extended and/or sparse DIMD coding modes may be defined as one or more additional intra coding modes, so that the signaling between the encoder and the decoder may be reduced through the indicating that the corresponding DIMD coding mode has been used for encoding the current block, e.g. through a coding mode index.

An decoder configured to use one or several of the baseline, extended and sparse DIMD schemes for a current block of an image to be decoded, and as a consequence to autonomously select at least one intra prediction video coding mode based on a gradient analysis for the decoding of the current block, may in some embodiments be further configured to receive in the encoded bitstream control data indicating that the corresponding DIMD coding mode has been used for encoding the current block, and further to the reception of such control data to decode the current block using an embodiment of the corresponding DIMD scheme.

As the encoder produces a bit stream, pixels of encoded blocks may refer to pixels that have been encoded (the encoding of which generated bits in the output bit stream of the encoder), and then reconstructed by a decoding performed at the encoder side.

At the encoder, pixels of encoded blocks that have been encoded and then reconstructed may be referred to as "causal" pixels. At the decoder, pixels that have been decoded, that is, reconstructed from a bit stream generated by the encoding, may also be referred to as "causal pixels."

In each case (encoding or decoding), causal pixels may correspond to pixels in blocks preceding the current block in the block processing (encoding or decoding) sequence. At the encoder, each causal pixel may correspond to a pixel in the original image which belongs to a block preceding the current block in the encoding sequence.

In one or more embodiments of the baseline, extended and sparse DIMD schemes, the application area may be a selection of causal pixels, or when considering a so-called "causal area" comprising causal pixels (e.g. all causal pixels)j, a subset of the causal area, determined based on at least one feature of the current pixel block and/or of at least one block preceding the current pixel block in the processing sequence. At the encoder, the causal area may be determined as a selection of one or more causal pixels, that is, any pixel which has been encoded to produce bitstream data and then reconstructed at the encoder (e.g. through a decoding performed at the encoder), based on at least one feature of the current pixel block and/or of at least one block preceding the current pixel block in the processing sequence.

For example, in some embodiments, at the encoder side, the application area may comprise a selection of pixels that have already been processed by the encoder according to an embodiment of the used DIMD scheme, that is, encoded and then reconstructed (for the encoding of pixels following the encoded pixels according to an encoding sequence). At the decoder side, the application area may comprise a selection of pixels (according to an embodiment of the used DIMD scheme) that have been reconstructed by the decoder.

At the encoder, the block processing sequence may correspond to the block encoding sequence, that is, the sequence in which the pixel blocks dividing the image to be encoded, are encoded.

At the decoder, the block processing sequence may correspond to the block decoding sequence, that is, the sequence in which the pixel blocks dividing the image to be decoded, are decoded.

In some embodiments of the used DIMD scheme the block encoding sequence and the block decoding sequence may not be identical, and if different may be designed so that they lead to the same application area for each current block of the sequences.

In some embodiments of the used DIMD scheme, information on the partitioning of the image to be encoded into blocks may be included in the bitstream output by the encoder, so that the same partitioning of the image may be used at the decoder for decoding the image. Likewise, information on the block encoding sequence may be included in the bitstream output by the encoder, so that the same sequence may be used at the decoder for decoding the blocks.

In such embodiments of the used DIMD scheme, the application area may be defined at the decoder with pixels of the original image (to be encoded), yet chosen so that they correspond to pixels which will have been decoded (reconstructed) at the encoder upon decoding of the current block.

In embodiments of the used DIMD scheme where the processing sequence for encoding the blocks is identical to the processing sequence for decoding the encoded blocks, any pixel reconstructed after encoding and corresponding to a pixel of the original image belonging to a block preceding a current block to be encoded will correspond to a pixel already decoded when the decoding of the corresponding current block is performed at the decoder.

Fig. 3e is a block schematic diagram of a method of processing an image according to embodiments of the sparse DIMD scheme, applied to a current block of an image.

The following parameters may be used in the description of this method according to the definitions below:
B is the block being processed (e.g. the block for which gradient analysis computation is intended), that is, the current pixel block.

D is a set of all accessible pixels from bottom-left, left, top-left, top, and/or top-right sides of B. Depending on the block (e.g. position in the frame) some of these sides may be unavailable.

$B_D$ is the set of previously coded blocks co-located within D. While D may be seen as a set of pixels, $B_D$ may be seen as a set of previously coded blocks. Pixels of such previously coded blocks may in some embodiments belong to the set D.

S is a non-empty proper (i.e. strict) subset of D, containing the final set of pixels for the gradient analysis computation. In other words, $S \neq 0$ and $S \subset D$ and $S \neq D$. Depending on the embodiment, the application area may be determined as the subset S of pixels in the set D.

M is the number of pixel(s) in S.

$C = \{(x_i, y_i) | i = 1, ..., M\}$ is a set containing the absolute coordinates of template samples in S, relative to an origin located at top-left corner of the image being processed.

$V = <v_1, v_2, .., v_N>$ of length N is a feature vector extracted from $B \cup B_D$.

$G: (B \cup B_D) \rightarrow V$ is the feature extractor function.

$H: V \rightarrow S$ is the subset selection function.

Referring to Fig. 3e, N features of a set of blocks $B \cup B_D$ comprising the current block B and the set of blocks $B_D$ may be determined (353) by applying a feature extractor function G to the set of blocks $B \cup B_D$ : $V = G(B \cup B_D) = \langle f_1, f_2, ..., f_N \rangle$.

Based on the determined set of features V (S=H(V)), an application area may be determined (354) based on a set of pixels S included in the set D.

A gradient analysis may then be performed (355) on the determined application area, and depending on the embodiment, a histogram HoG may be calculated based on the gradient analysis.

One or more intra modes may then be selected (356) based on the calculated histogram HoG.

In one or more embodiments of sparse DIMD scheme, the sparse DIMD scheme may be described as follows: Given a block B and its neighboring blocks $B_D$, design the function G to extract the feature vector V from $B \cup D$. Then, design the function H to determine the set S, its size M and coordinates of its pixels P. These outputs can then be injected to the baseline DIMD to perform a gradient analysis and compute a histogram HoG, as described herein.

In one or more embodiments of sparse DIMD scheme, the sparse DIMD scheme may further comprise the determining the at least one feature by applying a feature extraction function G to the current pixel block and/or at least one first block preceding the current pixel block in the processing sequence.

In one or more embodiments of sparse DIMD scheme, the feature extraction function may be applied to a reunion set of pixels comprising pixels of the current pixel block and pixels of a set of previously processed blocks co-located within a first set of available pixels from bottom-left, left, top-left, top, and/or top-right sides of the current pixel block.

In one or more embodiments of sparse DIMD scheme, the sparse DIMD scheme may further comprise: determine a first set of pixels comprised in the at least one first block preceding the current pixel block in the processing sequence, determine a second set of pixels as a strict subset of the first set of pixels, and determine the application area by selecting at least one pixel in the second set of pixels based on the at least one feature.

In one or more embodiments of sparse DIMD scheme, the first set of pixels may be determined as a set of available pixels from bottom-left, left, top-left, top, and/or top-right sides of the current pixel block, and the application area may be determined as a strict subset of the first set of pixels, based on the at least one feature.

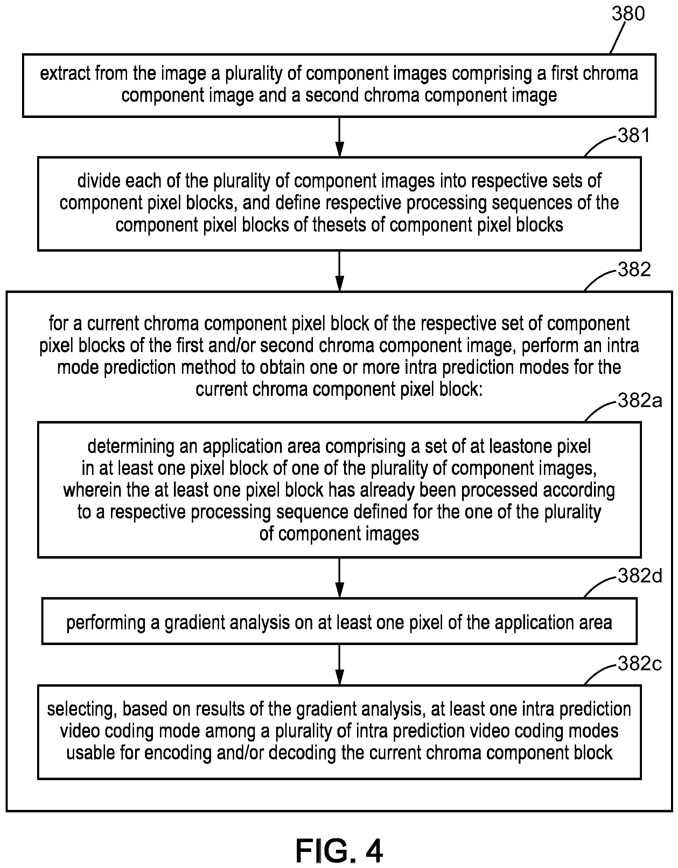

Fig. 4 is a block schematic diagram of a method of processing an image according to embodiments of the present subject disclosure.

As discussed above, using a DIMD scheme (whether for example the baseline, extended, or sparse DIMD scheme) advantageously provides a method for autonomously generating one or more intra prediction modes, at an encoder and at a decoder, thereby eliminating the need to include, in the bitstream generated by the encoder, information related to the at least one intra prediction mode selected based on a gradient analysis. This results in an improvement in the compression efficiency for a given bitrate, or in a decrease of the bitrate at the output of the encoder, at the expense of an increased computation complexity at the encoder and at the decoder. This increase in computation complexity at the decoder may in some instances limit the use of the DIMD scheme, for example in video players which are not equipped with sufficient computation capacities.

Through the computation of one or more intra prediction modes using a DIMD scheme at the encoder and/or at the decoder, a tradeoff is currently used between computation complexity and bandwidth gain. This tradeoff currently leads to considering the use of DIMD schemes only for luma samples of a processed image, that is, only for pixels of a luma component image extracted from the processed image, thereby generating only luma intra prediction modes. Indeed, in current encoders/decoders, a large amount of bits may be used to encode a luma intra prediction mode, as the case may be, so that the bandwidth gain provided by the DIMD schemes is deemed sufficient to afford the increase the computation complexity at the encoder and decoder.

Further, an image to be processed (e.g. encoded), for example of a video sequence (an image of a video sequence may sometimes be referred to as a "video frame"), may be considered through the three color components (also referred to as color planes or spaces) that can be distinguished for the pixels of the image: one luminance color component (sometimes referred to as the "Y" color component, and also called luma pixel or luma sample), and two chrominance color components (sometimes referred to as the "Cb" and "Cr" color components, and also called chroma pixels or chroma samples). As discussed above, a "channel type" distinction may also be made, between the luminance color component channel type on the one hand, and the chrominance color components channel type on the other hand.

Therefore, based on an input image to be processed according to the present subject disclosure, a luma channel type image and a chroma channel type image, respectively corresponding to the luma channel type and to the chroma channel type, may be generated.

In the conventional art, given the bandwidth gain vs. computation complexity mentioned above with respect to using a DIMD scheme, such use has only been considered for a luma channel type image. As a consequence, use of a DIMD scheme for encoding the chroma channel type image has not been considered, and encoding the chroma channel type image using an intra prediction mode is performed according to conventional art methods not related to DIMD. In particular, according to this conventional art, no distinction is made, for purposes of generating an intra prediction mode for a chroma channel type image, between the two distinct chrominance color components (also referred to as color spaces or planes) comprised in the chroma channel type image, so that the Cb and Cr color components of the encoded image share the same prediction mode.

The present subject disclosure advantageously suggests that any DIMD scheme could be used for at least one of, and in some embodiments each of the two distinct chrominance color components of an input image to be processed. It anticipates on the increase of image processing capabilities of video encoders and decoders in the near future, as such processing capabilities will be available for DIMD schemes, e.g. the sparse DIMD scheme, that are not as demanding in terms of processing power as other DIMD schemes. The present subject disclosure further advantageously uses the decrease of computation complexity provided by improved DIMD schemes such as the sparse DIMD scheme. As a consequence, the Cb and Cr color components of the input image may be encoded separately, and as a result may not necessarily share the same prediction mode, which improves the encoding of the input image. Further, the prediction mode for each of the Cb and Cr color components of the input image may be computed using a DIMD scheme, for example the baseline DIMD scheme, the extended DIMD scheme or the sparse DIMD scheme.

According to one or more embodiments of the present subject disclosure, a plurality of component images comprising a first chroma component image and a second chroma component image may first be extracted (380) from the input image to be processed.

Image data of each component image extracted from the input image may comprise pixel data referred to as "component pixels", and which sometimes may also be referred to as "pixels" for the sake of simplicity.

Each of the plurality of component images may then be divided (381) into respective sets of component pixel blocks, and respective processing sequences of the component pixel blocks of the sets of component pixel blocks may be defined for purposes of processing the blocks of the component images according to respective processing sequences.

The dividing the first and second chroma component images into blocks may lead to obtaining two separate sets of blocks, each set corresponding to a chroma component, such as, for example, a Cr component and a Cb component, or as another example, a U component and a V component. Therefore in some embodiments, the dividing the first and second chroma component images may result in two sets of Cb and Cr blocks, which blocks may possibly be co-located.

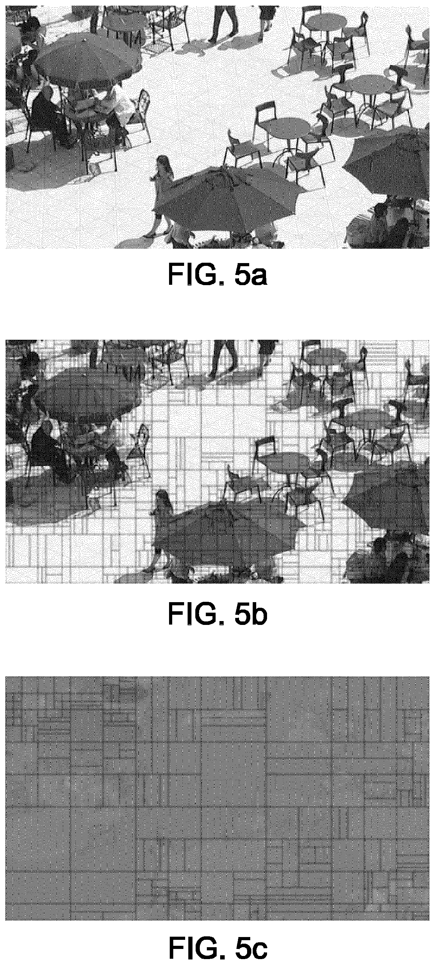

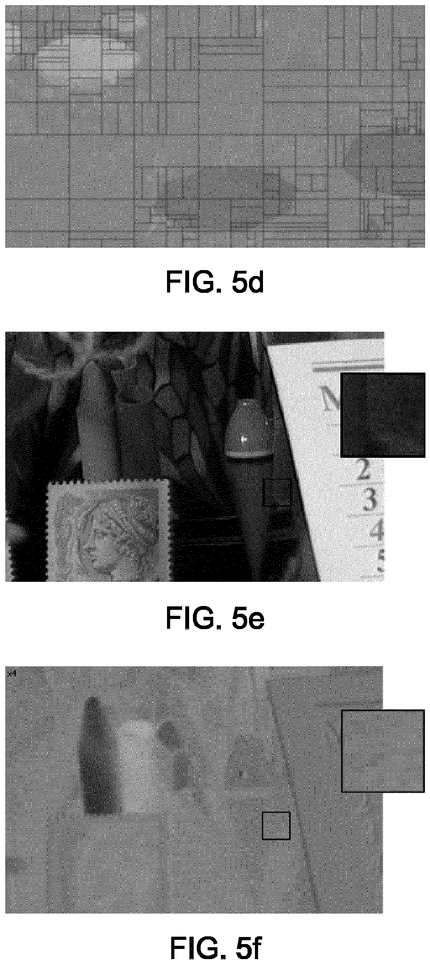

Fig. 5a shows an exemplary YCbCr image based on which a Y component image, shown on Fig. 5b, a Cb component image, shown on Fig. 5c, and a Cr component image, shown on Fig. 5d, are extracted. Figs. 5b, 5c, and 5d further illustrate exemplary partitioning of the Y component image, the Cb component image, and the Cr component image, respectively, into luma component pixel blocks, and chroma component pixel blocks (Cb blocks for the Cb component image, and Cr blocks for the Cr component image), respectively.

The pixel blocks may or may not be of equal size or of same shape. The pixel blocks of a component image may each be any set of pixels of the component image, and may be chosen so that the set of blocks forms a partition of the component image, that is, each pixel of the image belongs to only one block.

For example, in embodiments using the H.264/MPEG-4 AVC standard, a component image may be divided into so-called "macroblocks" of 16x16 pixels. Each macroblock can be split into multiple blocks depending on the coding mode selected at the macroblock level. In intra, a macroblock can be split into four 8x8 blocks, or sixteen 4x4 blocks.

As another example, in embodiments using the HEVC standard, a component image may be divided into so-called Coding Tree Units (CTU). The size of the CTU is fixed for an entire sequence and is signaled in the Sequence Parameter Set (SPS). It can vary between 8x8 and 64x64 pixels. Each CTU can later be split into 4 Coding Units (CU), and each CU can be further split into 4 smaller CUs, and so on, until a maximum CU depth is reached (CU size varies between 8x8 and 64x64 pixels).

In some embodiments, an input image may be divided into pixel blocks, where the pixel values of each block may correspond, depending on whether the block belongs to a luma channel type image extracted from the input image or a chroma channel type image extracted from the input image, to luma sample values, or to chroma sample values. For example, the H.264/MPEG-4 AVC video coding standard uses so-called "macroblocks", each macroblock comprising a 16 x 16 block of luma samples, and two corresponding 8 x 8 blocks of chroma samples for 4:2:0 color sampling. The AVC video coding standard is a specific example which specifies using a partition into blocks which is identical for the first and second chroma component image. However, the proposed method may be used with a different partition into blocks for each of the first and second chroma component images.

In one or more embodiments, the respective processing sequence for processing, at an image processor (for example at an encoder or at a decoder), pixel blocks of a component image may define a sequence according to which blocks are processed (e.g. encoded or decoded) one after another. In some embodiments, because the respective pixel blocks of each of the first and second chroma component image may be encoded at an encoder according to a predetermined sequence, the encoded blocks may be decoded at the decoder according to the same processing sequence. For example, a raster scan sequence may scan the blocks of the component image under processing starting from the block located at the leftmost upper corner of the component image (represented by a pixel matrix), and progress to the block adjacent to the previously scanned block located to the right. At the end of a line of blocks, the sequence may proceed to the next line scanning the blocks from the left to the right. Blocks sub-divided into sub-blocks may in some embodiments be scanned in the same manner.

In some embodiments, an intra mode prediction method (382) may be performed for a so-called "current" chroma component pixel block of the respective set of component pixel blocks of the first and/or second chroma component image, in order to obtain one or more intra prediction modes for the current chroma component pixel block. Depending on the embodiment, such intra mode prediction method may be performed for a plurality of, or for each of the plurality of chroma component pixel blocks of the respective set of component pixel blocks of the first and/or second chroma component image, in order to obtain one or more intra prediction modes for each processed chroma component pixel block.

Depending on the embodiment, the intra mode prediction method may be performed on one or more blocks of one of the first and second chroma component images, or may be successively performed on respective blocks on the first and second chroma component images (or vice versa).

For example, a DIMD scheme may be applied to the blocks of each of the first and second chroma component images, so as to obtain one or more first intra prediction modes for the blocks of the first chroma component image, and one or more second intra prediction modes for the blocks of the second chroma component image.

In one or more embodiments, the intra mode prediction method performed on a current block of a chroma component image extracted from the input image may comprise the following operations: determining (382a) an application area comprising a set of at least one pixel in at least one pixel block of one of the plurality of component images, wherein the at least one pixel block has already been processed according to a respective processing sequence defined for the one of the plurality of component images; performing (382b) a gradient analysis on at least one pixel of the application area; and selecting (382b), based on results of the gradient analysis, at least one intra prediction video coding mode among a plurality of intra prediction video coding modes usable for encoding and/or decoding the current chroma component pixel block.

Therefore, in some embodiments, an intra mode prediction method may be performed on one or more pixel blocks of the first chroma component image, which may comprise the following operations: determining for each processed block a respective application area comprising a set of at least one pixel in at least one pixel block of one of the plurality of component images, wherein the at least one pixel block has already been processed according to a respective processing sequence defined for the one of the plurality of component images, performing a gradient analysis on at least one pixel of the application area, and selecting, based on results of the gradient analysis, at least one intra prediction video coding mode among a plurality of intra prediction video coding modes usable for encoding and/or decoding the processed block of the first chroma component image. Further, the intra mode prediction method may be performed on one or more pixel blocks of the second chroma component image, which may comprise the following operations: determining for each processed block a respective application area comprising a set of at least one pixel in at least one pixel block of one of the plurality of component images, wherein the at least one pixel block has already been processed according to a respective processing sequence defined for the one of the plurality of component images, performing a gradient analysis on at least one pixel of the application area, and selecting, based on results of the gradient analysis, at least one intra prediction video coding mode among a plurality of intra prediction video coding modes usable for encoding and/or decoding the processed block of the second chroma component image.

For example, in some embodiments, an intra mode prediction method may be performed on one or more blocks of a Cr chroma component image extracted from an input image, which may comprise the following operations for a processed Cr chroma component block: determining for the Cr chroma component block a respective application area comprising a set of at least one pixel in at least one pixel block of one of the plurality of component images (which, depending on the embodiment, be the Cr chroma component image, the Cb chroma component image, or the Y luma component image), wherein the at least one pixel block has already been processed according to a respective processing sequence defined for the one of the plurality of component images (depending on the embodiment, respectively the Cr chroma component image, the Cb chroma component image, or the Y luma component image), performing a gradient analysis on at least one pixel of the application area, and selecting, based on results of the gradient analysis, at least one intra prediction video coding mode among a plurality of intra prediction video coding modes usable for encoding and/or decoding the Cr chroma component block. Further, the intra mode prediction method may be performed on one or more blocks of a Cb chroma component image extracted from the input image, which may comprise the following operations for a processed Cb chroma component block: determining for the Cb chroma component block a respective application area comprising a set of at least one pixel in at least one pixel block of one of the plurality of component images (which, depending on the embodiment, be the Cr chroma component image, the Cb chroma component image, or the Y luma component image), wherein the at least one pixel block has already been processed according to a respective processing sequence defined for the one of the plurality of component images (depending on the embodiment, respectively the Cr chroma component image, the Cb chroma component image, or the Y luma component image), performing a gradient analysis on at least one pixel of the application area, and selecting, based on results of the gradient analysis, at least one intra prediction video coding mode among a plurality of intra prediction video coding modes usable for encoding and/or decoding the Cb chroma component block.

Therefore, in one or more embodiments of the present subject disclosure, each of the first and the second chroma component images may be processed using a DIMD scheme, so that one or more intra prediction video coding modes may be obtained for each of the first and second chroma component images.

Such embodiments of the proposed scheme advantageously uses the fact that collocated Cb and Cr blocks may have uncorrelated textures, so that the intra prediction modes derivable for each of the collocated Cb and Cr blocks, which reflect the respective textures (in particular the texture orientations), may be different, thereby leading to an improved encoding of blocks of chroma component images of an input image. The DIMD scheme advantage can further be leveraged for deriving distinct intra prediction modes for each of the collocated Cb and Cr blocks, as regardless of the used DIMD scheme, there would be no increase in the amount of bits generated at the encoder output resulting from the separate encoding of the collocated Cb and Cr blocks.

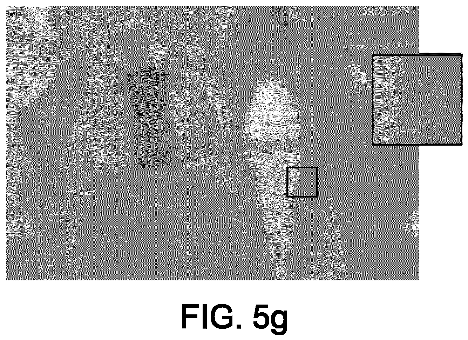

For example, in VVC, one IPM is shared between the two chrominance components of Cb and Cr. This design is based on the assumption that there is usually an inter-component correlation between the Cb and Cr. However, in some cases, this correlation is poor and the shared IPM does not properly model the texture in one or both chrominance components. For example, a texture may generate a complex variation in the Cb plane, while the Cr plane remain smooth. Some specific texture pattern may even generate Cb and Cr edges orthogonal to each other. Both of these situations are illustrated on a single frame of the Cactus sequence, as shown on Figures 5e, 5f and 5g. Figure 5e shows an exemplary YCbCr image, and Figures 5f and 5g show its Cb and Cr chrominance component images, respectively. The zoomed regions on Figures 5e, 5f and 5g show examplary situations where the inter-component correlation between the Cb and Cr are low, hence, one shared IPM is inefficient. The upper square is an example of orthogonal dominant edges, while on the lower square, the Cb plane retains only noise and the Cr plane captures a smooth edge. To address the poor inter-component correlation issue, in one or more embodiments, the proposed method derives IPM of each chrominance component separately. Since DIMD comes with no IPM signaling, the mode separation of chrominance components will not impact the rate cost.

Various embodiments of the different DIMD schemes described in the present subject disclosure may be used, depending on the embodiment, for purposes of applying a DIMD scheme to one or more block of a chroma component image extracted from an input image to be processed. Moreover, any DIMD-like scheme, whether existing or an evolution or improvement thereof, which uses operations described herein in relation to an intra mode prediction method may advantageously be used according to the present subject disclosure so as to respectively obtain one or more intra prediction video coding modes for one or more pixel blocks of a chroma component image extracted from an input image to be processed.

Depending on the embodiment, the same DIMD scheme or different DIMD schemes may be respectively applied to blocks of the first and/or second chroma component images.

In embodiments in which the same DIMD scheme is applied to blocks of the first chroma component image and/or blocks of the second component image, such DIMD scheme may be applied differently with respect to parameters of such DIMD scheme, such as configuration parameters of the processing sequence for processing blocks, parameters of the gradient analysis, parameters of the determination of an application area.

For example, in one or more embodiments, the plurality of chroma channel type pixel blocks may be processed according to a processing sequence, which is used for determining an application area. In some embodiments, a first processing sequence may be defined for the processing of blocks of the first chroma component image, and a second processing sequence, distinct from the first processing sequence, may be defined for the processing of blocks of the second chroma component image.

Likewise, respective application areas may be determined for the processing of blocks of the first chroma component image according to one or more first application area determination methods, whereas respective application areas may be defined for the processing of blocks of the second chroma component image according to one or more second application area determination methods that are distinct from the one or more first application area determination methods.

Various exemplary schemes for determining an application area and parameters thereof are provided in the following.

Fig. 6a illustrates an exemplary causal area, that is, an exemplary set of causal pixels (401) for a component image (400), which may correspond to a current chroma component pixel block (402) being processed (e.g. encoded or decoded), for a raster scan type processing (e.g. analysis, encoding and/or decoding) sequence.

The pixels located in the third area (403) of the image are non-causal, and may preferably not be used in the implementation of the chosen DIMD scheme. Indeed, at the decoder side, these pixels will not have been decoded when the decoding of the current chroma component pixel block (402) is undertaken.

In one or more embodiments, any subset of the set of causal chroma component pixels may be determined to be the application area on which a gradient analysis is performed.

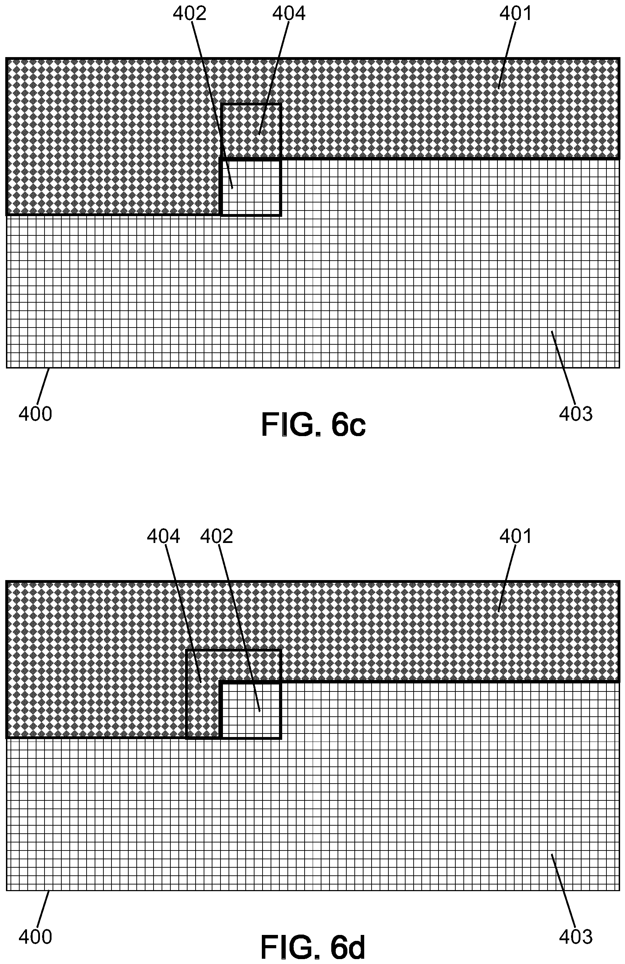

Figs. 6b, 6c and 6d illustrate different examples of application areas (404b, 404c, 404d) determined as subsets of the causal area (401) of Fig. 6a, which may in some embodiments be used with the baseline DIMD scheme or the extended DIMD scheme.

The baseline DIMD/extended DIMD application area (404b) shown on Fig. 6b is a square-shaped set of pixels located on the left of the current block in the causal area (401).

The baseline DIMD/extended DIMD application area (404c) shown on Fig. 6c is a square-shaped set of pixels located above the current block in the causal area (401).

The baseline DIMD/extended DIMD application area (404d) shown on Fig. 6d is a L-shaped set of pixels located on the left of and above the current block in the causal area (401).

In some embodiments of the baseline DIMD/extended DIMD scheme, a video encoder and video decoder implementing the proposed method may be configured so that the baseline DIMD/extended DIMD application area determined at an encoding side is identical to the baseline DIMD/extended DIMD application area determined at the corresponding decoding side, for each coding block of respective processing sequences.

The determining of the baseline DIMD/extended DIMD application area may comprise determining a shape and a size of the set of pixels belonging to one or more blocks preceding the current block in the block processing sequence.

Depending on the embodiment of the baseline DIMD/extended DIMD scheme, a size (in number of pixels) and/or shape of the baseline DIMD/extended DIMD application area may be determined based on the type of gradient analysis to be performed on the baseline DIMD/extended DIMD application area. In some embodiments of the baseline DIMD/extended DIMD scheme, a minimum size (that is, a minimum number of pixels) of the baseline DIMD/extended DIMD application area, or of sections or dimensions of the baseline DIMD/extended DIMD application area may be determined based on the type of gradient analysis to be performed on the baseline DIMD/extended DIMD application area. For example, in embodiments of the baseline DIMD/extended DIMD scheme wherein the gradient analysis is performed using a $3 \times 3$ Sobel filter matrix, the baseline DIMD/extended DIMD application area will be chosen to have a width of at least 2 pixels in its different parts or sections. As another example, a width (in pixels) of the baseline DIMD/extended DIMD application area, or sections thereof, may be chosen based on the dimensions of a filter matrix to be used for the gradient analysis.

As a gradient analysis will be performed on the application area, the size of the application area may preferably be determined as a compromise between obtained performances (in particular coding efficiency performances) and computation complexity.

In some embodiments, the shape of the application area may be determined so that the application area does not include any disjoint set of pixels. That is, the pixels of the application area may be determined so that, except for the edge pixels (pixels located at an edge of the application area), any pixel of the application area has at least two adjacent pixels that also belong to the application area.

In other embodiments, the application area may comprise several disjoints sets of pixels. For example, the application area may be determined to be substantially L-shaped around a current block, yet without any pixels surrounding the corner of the current block. In such case, the application area may comprise two disjoint strips of pixels, for example a horizontal strip and a vertical strip, with no pixel belonging to both strips.

Depending on the embodiment, the application area determined for a current pixel block of a chroma component image under processing may be determined based on pixels of blocks of a component image of a plurality of component images extracted from an input image. For example, in embodiments where a first and second chroma component images are extracted from the input image, the application area determined for a current pixel block of a chroma component image (the first or second chroma component image) under processing may be, depending on the embodiment, determined based on pixels of blocks of the same chroma component image, or based on pixels of blocks of the other chroma component image. As another example, in embodiments where a first and second chroma component images as well as a luma component image are extracted from the input image, the application area determined for a current pixel block of a chroma component image (the first or second chroma component image) under processing may be, depending on the embodiment, determined based on pixels of blocks of the same chroma component image, or based on pixels of blocks of the other chroma component image or of the luma component image.

Therefore the component image based on which the application area may be determined (referred to in the following as "application image") may be chosen in one or more embodiments through a parameter (referred to in the following as "parameter 1") of the application area determination scheme used for performing the intra mode prediction method.

Another parameter (referred to in the following as "parameter 2") of the application area determination scheme used for performing the intra mode prediction method that may be used in one or more embodiments is related to whether the application area is determined based on features extracted from blocks co-located with the current pixel block under processing and/or based on features extracted from one or more blocks preceding the current pixel block under processing or a block corresponding thereto according to a predefined processing sequence (such options may collectively be referred to as the "application region").

That is, in one or more embodiments, the application area for a current chroma component block of a current chroma component image may be determined based on features extracted from pixels of a block of another component image that corresponds to the current chroma component block as well as, depending on the embodiment, pixels of blocks preceding in the current chroma component image the current chroma component block according to a processing sequence defined for blocks of the current chroma component image, or pixels of blocks preceding in a different component image a block corresponding to the current chroma component block according to a processing sequence defined for blocks of the other component image. In other embodiments, the application area may be determined based on features extracted only from pixels of blocks preceding in the current chroma component image the current chroma component block according to a processing sequence defined for blocks of the current chroma component image, or depending on the embodiment pixels of blocks preceding in a different component image a block corresponding to the current chroma component block according to a processing sequence defined for blocks of the other component image.

For example, in some embodiments, the at least one pixel block of the application area may be spatially preceding a pixel block of the one of the plurality of component images corresponding to the current chroma component pixel block of the first or second chroma component image.

In other embodiments, the at least one pixel block of the application area may be spatially co-located with a pixel block of the one of the plurality of component images corresponding to the current chroma component pixel block of the first or second chroma component image, wherein the one of the plurality of component images is different from the first or second chroma component image in which the current chroma component pixel block is comprised.

In one or more embodiments, the parameter 1 (related to the choice of the application image in which the application area is determined) and parameter 2 (related to the area of the application image in which the application area is determined) that may be used for the determination of the application area may be configured with the following possible values, which may lead to distinguishing the following five exemplary different embodiments based on the values that may be chosen for such parameters:

Parameter1: Three possible values: Par1-value1: current chroma component image / Par1-value2: another chroma component image / Par1-value3: the luma component image.
Parameter 2: Two possible values: Par2-value1: spatially preceding to the current chroma component pixel block / Par2-value2: spatially co-located to the current chroma pixel block.

Embodiment 1: Determining the application area of the current chroma component pixel block from the current chroma component image, based on pixels of one or more blocks spatially preceding the current chroma component pixel block according to the processing sequence defined for processing the blocks of the current chroma component image.

Embodiment 2: Determining the application area of the current chroma component pixel block from a chroma component image distinct from the current chroma component image, based on pixels of one or more blocks spatially preceding a block of the distinct chroma component image corresponding to the current chroma component pixel block according to the processing sequence defined for processing the blocks of the distinct chroma component image.

Embodiment 3: Determining the application area of the current chroma component pixel block from a luma component image, based on pixels of one or more blocks spatially preceding a block of the luma component image corresponding to the current chroma component pixel block according to the processing sequence defined for processing the blocks of the luma component image.

Embodiment 4: Determining the application area of the current chroma component pixel block from a chroma component image distinct from the current chroma component image, based on pixels of one or more blocks spatially co-located with a block of the distinct chroma component image corresponding to the current chroma component pixel block according to the processing sequence defined for processing the blocks of the distinct chroma component image.

Embodiment 5: Determining the application area of the current chroma component pixel block from a luma component image, based on pixels of one or more blocks spatially co-located with a block of the luma component image corresponding to the current chroma component pixel block according to the processing sequence defined for processing the blocks of the luma component image

These five exemplary embodiments may be summarized in the following table:

| | | Parameter 2 (application region) | |
| --- | --- | --- | --- |
| | | Preceding | Co-located |
| **Parameter 1 (application image)** | **Current chroma component image** | Embodiment 1 | Not used |
| | **Another chorma component image** | Embodiment 2 | Embodiment 4 |
| | **Luma component image** | Embodiment 3 | Embodiment 5 |

Hereinafter, the computation of a gradient for each pixel of the application area according to embodiments of the present subject disclosure is described in further details.

In some embodiments, the computation of a gradient at a given pixel may comprise the computation of a gradient of the intensity of the pixel, that is, of the value at the pixel. Such gradient provides an estimate of a direction of the greatest variation from light to dark, and of a change rate in the estimated direction. A gradient analysis performed on pixels of a (luma and/or chroma) component image can therefore identify the points of the image where the luminosity suddenly changes, which points may be viewed as edges, and provide an estimate of an orientation of those detected edges.

A gradient analysis is typically used in image processing to characterize changes in the intensity of luma values of pixels of an image, to calculate a direction and a magnitude of such a change for a given pixel. A gradient analysis may for example be performed as part of an edge detection analysis to determine a principal angular direction for an analyzed portion of the image.

Various approaches that may be used depending on the embodiment for estimating a principal angular direction (that is, an orientation) at any given point are described below.

Edge detection methods based on derivatives have been developed, some of which generate an image gradient, on which edges present on the original image are emphasized, based on the convolving of the analyzed image portion with a filter. The filter may be a Finite Impulse Response (FIR) filter (e.g. the FIR filters proposed by Sobel or Prewitt), or an Infinite Impulse Response (IIR) filter (e.g. IIR filters based on Gaussian derivatives).

The principal angular direction estimation provided by these methods is however not optimized, as a precise estimation cannot be obtained in each point of an analyzed image portion. For example, errors can be generated for points located in the neighborhood of local extrema points, which are points the gradient is near zero and its orientation indefinite.

Other approaches, based on the use of oriented filter banks, e.g. Gabor filters, Steerable filters, may also be used, even though they are typically used for computing estimations of multiple orientations.

Orientation tensors, or structure tensors, may also be used, even though these approaches calculate spatial statistics on local gradients, which makes them somewhat unfit for the estimation of local orientation, that is, the estimation of an orientation at a given point of the image.

The gradient of a two-variable function (e.g., the image intensity function) at each image point may be computed as a two-dimensional vector, with components calculated by the derivatives in the horizontal and vertical directions. At each image point (pixel), the gradient vector points in the direction of largest possible intensity increase, and the magnitude of the gradient vector corresponds to the rate of change in that direction. The gradient is therefore zero in an area where the intensity is constant.

As the intensity of pixels of a digital image is a discrete function of the pixel coordinates in the pixel matrix representing the image, derivatives of such a discrete function may only be defined under an assumption that the pixels of the image (values of the discrete function) are samples of a continuous intensity function for the image which has been sampled.

In one or more embodiments, a gradient operator which uses convolution matrices may be used for the computation of the gradient. The convolution matrix may be convolved with the image for the calculation of approximate derivatives in the horizontal and vertical directions. In such embodiments, the computing the gradient may comprise the generating respective estimates of derivatives of an intensity level at the pixel in the horizontal and vertical directions by performing a convolution of a source matrix of pixels of the image with horizontal and vertical filter matrices, respectively.

For example, for a given source image A, represented by a matrix *MA*, two matrices *MGx* and *MGy* may be obtained based on convolutions of the matrix A with two filter matrices *Mx* and *My,* respectively corresponding to the horizontal and vertical directions. The matrices *MGx* and *MGy* may be viewed as respectively representing two images *Gx* and *Gy,* each point of which representing estimates of horizontal and vertical derivatives at the corresponding point of the image A, that is, approximate horizontal and vertical gradients (which may be viewed as approximate horizontal component and vertical component of the gradient vector) at the point:

*MGx = Mx * MA* for the horizontal direction, and
*MGy = My * MA* for the vertical direction,

where the operator * designates a matrix convolution operator.

If *MA* is an *MxN* matrix, and *Mx* and *My* are square $T \times T$ matrices (with $T < M$ and $T < N$), the matrices *MGx* and *MGy* will be $(M - T) \times (N - T)$ matrices.

For each point of the image A, the generated horizontal *MGx* and vertical *MGy* gradient components can be combined to compute a first gradient value *G* corresponding to a norm of the gradient vector at the point, and a second gradient value $\theta$ corresponding to a direction of the gradient vector at the point, as follows: $G = \sqrt{MGx^2 + MGy^2}$,

and $\theta = atan(\frac{Gy}{Gx})$ where *atan* is the arc tangent function.

In some embodiments, the first gradient value *G* may be used as representing an estimate magnitude of the directional change of the intensity at the point, while the second gradient value $\theta$ may be used as representing an estimate orientation of the directional change of the intensity at the pixel.

It will be appreciated by those having ordinary skill in the relevant art that any suitable method for computing a gradient representing a directional change of an intensity at a pixel of the image, such as, for example, edge detection methods, orientation tensor methods, filter bank methods, may be used in place of the above-described convolution matrix method which is given by way of example only.

In one or more embodiments, the gradient computed for a pixel of the application area may be mapped to an intra prediction mode among the plurality of intra prediction video coding modes usable, at the encoder, for encoding the current block, or, at the decoder, for decoding the current block.

In some embodiments, the second gradient value computed for a pixel of the application area, which represents an estimate orientation of the directional change of the intensity at the pixel, may be used to perform this mapping, by mapping this second gradient value to a directional intra prediction mode among the plurality of intra prediction video coding modes usable for encoding or decoding the current block.

In one or more embodiments, the mapping may be performed according to the following formula, in the exemplary case of an HEVC encoder:

$$M = \frac{33 \times (\theta - 0.75\pi)}{\pi} + 2$$

where $\theta$ is the second gradient value, and M is the intra prediction mode, among the 35 HEVC intra prediction modes, mapped with the value $\theta$.

More generally, the mapping may be performed according to the following formula, where N is the number of intra prediction modes available at the encoder for encoding the input video data:

$$M = \frac{(N - 2) \times (\theta - 0.75\pi)}{\pi} + 2$$

For example, in the case of the VVC standard for which 67 intra prediction modes are currently being considered, the mapping may be performed according to the following:

$$M = \frac{65 \times (\theta - 0.75\pi)}{\pi} + 2$$

In one or more embodiments, the selecting of the at least one intra prediction video coding mode based on a gradient analysis may further comprise the determining of respective weight values for several intra prediction modes among the plurality of intra prediction video coding modes, based on gradients computed for pixels of the application area. Depending on the embodiment, respective weight values may be determined for each of the plurality of intra prediction video coding modes available at the encoder and at the decoder.

In some embodiments, the above-described mapping of each computed gradient with an intra prediction mode may be used for determining the weight value associated with the intra prediction mode. That is, the weight value for an intra prediction video coding mode may be determined based on the one or more computer gradient mapped to the intra prediction video coding mode.

For example, the direction information obtained for each pixel of the application area through computation of the gradient may advantageously be used for the determination of the weights of intra prediction video coding modes via the mapping of computed second gradient values with intra prediction video coding modes.

In some embodiments, the weight value for an intra prediction video coding mode may be determined by combining respective first gradient values of computed gradients mapped to the intra prediction video coding mode. The mapping based on second gradient values of such computed gradients may for example be used.

For example, in some embodiments the first gradient values of computed gradients for which the respective second gradient values have been mapped to the same intra prediction video coding mode may be combined (e.g. summed) to obtain a weight value for that intra prediction video coding mode. In such cases, since second gradient values may be used to associate a computed gradient with a directional intra prediction video coding mode, non-directional intra prediction video coding modes may have a zero weight.

Once weight values have been determined for several intra prediction video coding mode, a set of selectable intra prediction video coding modes based on the gradient analysis may in some embodiments be defined as comprising the intra prediction video coding modes for which a weight value has been determined, or in other embodiments be defined as comprising only the intra prediction video coding modes for which a non-zero weight value has been determined. Depending on the embodiment, the set of selectable intra prediction video coding modes based on the gradient analysis may comprise all of the intra prediction video coding modes usable for encoding and/or decoding the current block, or only a subset thereof.

In one or more embodiments, an intra prediction video coding mode may be selected based on the gradient analysis in the set of selectable intra prediction video coding modes based on the respective weight values of the intra prediction video coding modes of the set.

Any selection criterion for selection of an intra prediction video coding mode among the selectable intra prediction video coding modes based on the gradient analysis that leads to the same selection result, whether the selection is performed at the encoder on the original image or at the decoder an a reconstructed image, may be used for performing the selection.

For example, a selection criterion according to which the intra prediction video coding mode with the greatest weight is selected based on the gradient analysis may be used in some embodiments. In another example, a selection criterion according to which a plurality of intra prediction video coding modes with the greatest respective weights are selected based on the gradient analysis may be used in some embodiments.

This selection criterion may also be refined in some embodiments with additional conditions to be met for fulfilling the criterion. In the case where no intra prediction mode available at the encoder satisfies the criterion, a default selection can be used to select a predetermined intra prediction mode (e.g. the DC intra prediction mode described above).

In one or more embodiments, a weight value histogram may be generated for purposes of selecting at least one intra prediction video coding mode based on a gradient analysis, based on the gradient computed for each pixel of the application area. In the following, such histogram may be indifferently referred to as a "gradient-based histogram," or a "histogram of gradients," or "HoG."

For example, such histogram may comprise the weight value calculated for each intra prediction video coding mode.

Referring to Fig. 7, in embodiments where only one intra prediction video coding mode is to be selected based on the gradient analysis, such intra prediction video coding mode may be selected based on the histogram of gradient, for example using a greatest value criterion. In the example illustrated on Fig. 7, the intra prediction video coding mode of index 10 would be selected to be used for the processing of the current chroma component pixel block. In embodiments where two intra prediction video coding modes are to be selected based on the gradient analysis, such intra prediction video coding modes may be selected based on the histogram of gradient, for example using the greatest value criterion. In the example illustrated on Fig. 7, the intra prediction video coding modes of index 10 and of index 18 would be selected to be used for the processing of the current chroma component pixel block. In embodiments where three intra prediction video coding modes are to be selected based on the gradient analysis, such intra prediction video coding modes may be selected based on the histogram of gradient, for example using the greatest value criterion. In the example illustrated on Fig. 7, the intra prediction video coding modes of index 10, of index 18, and of index 11 would be selected to be used for the processing of the current chroma component pixel block. More generally, in some embodiments, the $N_{DIMD}$ intra prediction video coding modes selected based on a gradient analysis may be selected as respectively corresponding to the $N_{DIMD}$ largest values of the histogram.

In one or more embodiments, the selection of an intra prediction video coding mode based on a histogram of gradients may be performed subject to a condition related to the histogram of gradients. For example, in some embodiments, only intra prediction video coding modes with a histogram value larger than a given threshold may be selected. The threshold may be set to be a value proportional to the largest value of the histogram or to the second largest value of the histogram. For example, let V be the second largest value of the histogram, only intra prediction modes having a histogram value larger than V.T, where T is a weight value that may for example be chosen in the range $0 < T \le 1$ (or

$$0 < T \le \frac{1}{2}$$ ), may be selected.

Alternatively, already selected intra prediction video coding modes based on a histogram of gradients may be discarded from the selection if their histogram value is not above a given threshold. The threshold may also be set to be a value proportional to the largest value of the histogram or to the second largest value of the histogram. For example, let V be the second largest value of the histogram, intra prediction modes having a histogram value larger than V.T, where T is a weight value that may for example be chosen in the range $0 < T \le 1$ (or $0 < T \le \frac{1}{2}$ ), may be discarded from the set of intra prediction video coding modes selected based on the gradient analysis. In such case, the number of intra prediction video coding modes selected based on a gradient analysis ($N_{DIMD}$) may in some embodiments be reduced (to $N'_{DIMD}$), possibly to the benefit of an increased number of intra prediction video coding modes that are selected, however not based on the gradient analysis ($N_s$). In the cases where $N_s$ is set to 0, only $N'_{DIMD}$ predictors may be determined, with the advantage that such reduced set of predictors based on which the final block predictor is computed are determined as reliable. Alternatively, the threshold may be adjusted, possibly dynamically, for example in order to accommodate a predefined number of intra prediction video coding modes to be selected based on a gradient analysis ($N_{DIMD}$).

The discarding of intra prediction video coding modes advantageously avoid processing predictors which are determined as unreliable, and therefore reduce the computation complexity associated with the used DIMD scheme.

In some embodiments, for one or more pixels, or for each pixel of the application area, a first gradient value representing an estimate magnitude of the directional change of the intensity at the pixel, and a second gradient value representing an estimate orientation of the directional change of the intensity at the pixel may be computed as part of the computation of a gradient for the pixel. The second gradient value may be used to map the computed gradient to an intra prediction video coding mode. That is, the second gradient value may be used to identify an intra prediction video coding mode corresponding to the computed gradient.

For each intra prediction video coding mode, a weight value may be calculated by combining the first gradient values of the computed gradients mapped to the intra prediction video coding mode. In embodiments where the first gradient values are added to each other, the resulting weight value of the intra prediction video coding mode is increased with the first gradient value of each computed gradient mapped to the intra prediction video coding mode.

Once all the pixels of the application area have been processed according to the used DIMD scheme, and given that the weighting of intra prediction video coding modes is cumulative, a histogram of weight values for the corresponding intra prediction video coding modes provides an efficient way to select an intra prediction video coding mode that is representative of the entire current chroma component pixel block. As a result, the at least one intra prediction video coding mode selected based on a gradient analysis according to the proposed method may be used for the prediction encoding of all the pixels of the current chroma component pixel block.

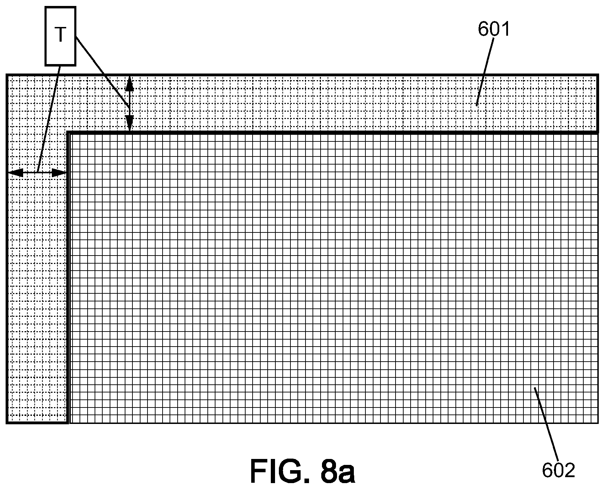

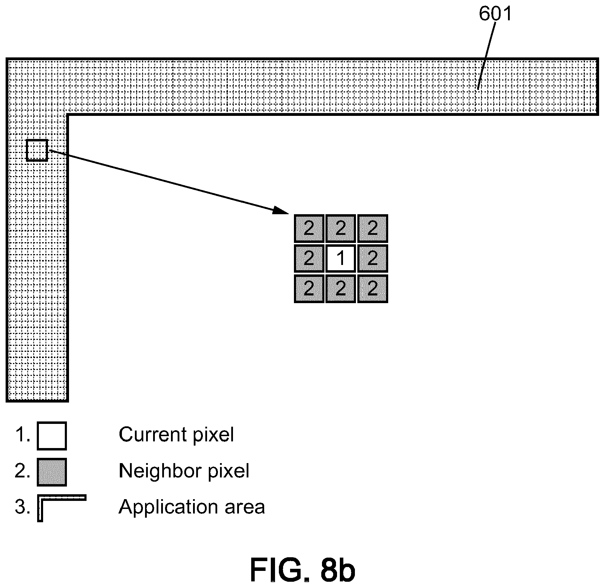

Hereinafter an exemplary embodiment of a gradient analysis (advantageously usable for any of the baseline, extended and sparse DIMD schemes) is described as illustrated on Figs. 8a and 8b.

In this exemplary embodiment, an application area (601) is determined as a set of pixels located on the left and above the current block (602). In this example, the application area surrounds the current block with a T-pixels wide band along the left side of the current block (602), and a T-pixel wide band along the upper side of the current block (602).

For example, the T parameter may be chosen equal to 2, 4, or 8. The value T = 2 offers a good compromise between coding efficiency and additional computation complexity at the decoder. Note that the increase of computational complexity is a more salient concern at the decoder side, because a decoder would have to support a DIMD scheme as long as it is configured to decode any bit stream that is output by an encoder which may have used the DIMD scheme to encode input video data.

The gradient analysis performed on this application area may use a Sobel filter of size 3x3, which provides good results in view of the simplicity of its implementation.

The computation of the intensity gradient for a pixel of the application area may be performed based on the following two filter matrices *Mx* and *My* respectively corresponding to the horizontal and vertical directions:

$$Mx = \begin{bmatrix} -1 & 0 & 1 \\ -2 & 0 & 2 \\ -1 & 0 & 1 \end{bmatrix} \text{ and } My = \begin{bmatrix} -1 & -2 & 1 \\ 0 & 0 & 0 \\ 1 & 2 & 1 \end{bmatrix}$$

As described above, for a given source image A, represented by a matrix *MA,* two matrices *MGx* and *MGy* may be obtained based on convolutions of the matrix A with *Mx* and *My,* as follows:

$$MGx = Mx * MA \text{ and } MGy = My * MA$$

Hereinafter is provided a numerical example of calculation of the *MGx* and *MGy* matrices.

Let *MA* be the following matrix.

$$MA = \begin{bmatrix} 15 & 12 & 65 & 94 \\ 30 & 20 & 29 & 27 \\ 10 & 20 & 6 & 3 \\ 20 & 20 & 40 & 49 \end{bmatrix}$$

And *let Mx* and *My* be the 3x3 Sobel matrices described above. In that case, *MGx* and *MGy* will be:

$$MGx = \begin{bmatrix} -15 - 30 \times 2 - 10 + 65 + 29 \times 2 + 6 & -12 - 20 \times 2 - 20 + 94 + 27 \times 2 + 3 \\ -30 - 10 \times 2 - 20 + 29 + 6 \times 2 + 40 & -20 - 20 \times 2 - 20 + 27 + 3 \times 2 + 49 \end{bmatrix}$$

$$MGx = \begin{bmatrix} 44 & 79 \\ 11 & 2 \end{bmatrix}$$

$$MGy = \begin{bmatrix} -15 - 12 \times 2 - 65 + 10 + 20 \times 2 + 6 & -12 - 65 \times 2 - 94 + 20 + 6 \times 2 + 3 \\ -30 - 20 \times 2 - 29 + 20 + 20 \times 2 + 40 & -20 - 29 \times 2 - 27 + 20 + 40 \times 2 + 49 \end{bmatrix}$$

$$MGy = \begin{bmatrix} -48 & -201 \\ 1 & 44 \end{bmatrix}$$

The Sobel filter is advantageous in that it only uses, for the calculation of a gradient at a given point, 3x3 neighbor pixels located around said given point. I addition, the numbers used for the calculation of the gradient are integers. As a consequence, this filter can be implemented in software as well as in hardware. Only 8 points located around the point for which the gradient is calculated are used for the calculation of the gradient, as illustrated on Fig. 8b, which shows 8 neighbor pixels located around a current pixel for which a gradient computation is performed.

An intra prediction video coding mode can then be selected based on weight values calculated for each available intra prediction video coding modes, for example using a maximum weight criterion as described above.

Referring back to Fig. 3c, various embodiments can be derived from the extended DIMD scheme illustrated on Fig. 3c, which may advantageously be used for processing chroma component pixel blocks of a chroma component image according to embodiments of the present subject disclosure, and of which a few examples are provided here-below:

Exemplary embodiment 1: $N_s = 0$, $N_{DIMD} \geq 2$, averaging: In the first exemplary embodiment of the extended DIMD scheme, all the selected intra prediction video coding modes are selected based on a gradient analysis ($N_S = 0$, $N_{DIMD} \geq 2$). For example, $N_{DIMD}$ intra prediction modes are selected based on the $N_{DIMD}$ largest HoG values. $N_{DIMD}$

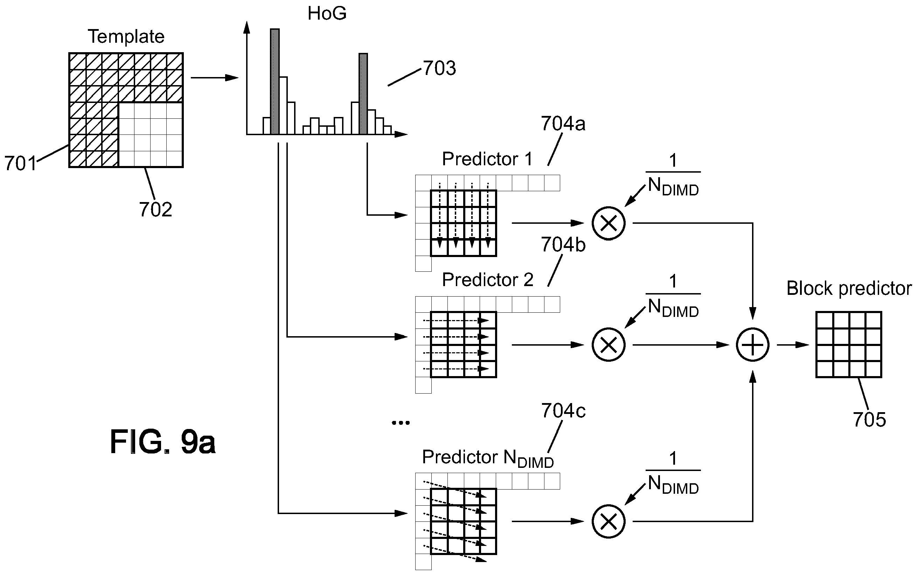

predictors $P_i$ (i = 1... $N_{DIMD}$) are then computed using the $N_{DIMD}$ selected intra prediction video coding modes. The final predictor $P_B$ is computed as a pixel to pixel average of predictors $P_i$ (i = 1... $N_{DIMD}$): $P_B$ = sum ($P_i$) / $N_{DIMD}$, (i = 1...$N_{DIMD}$). This specific exemplary embodiment is illustrated on Fig. 9a, which shows an application area (701) partially surrounding a chroma component pixel block currently under processing (702). A gradient analysis is performed on pixels of the application area (701), which leads to a histogram of gradients (703) as described above. In the illustrated example, at least three intro prediction modes are selected, that each correspond to a value of the histogram (703). As shown on Fig. 9a, the $N_{DIMD}$ selected modes may correspond to the $N_{DIMD}$ highest values of the histogram. Based on the selected modes, NDIMD predictors are computed: "Predictor 1," "Predictor 2," ..., "Predictor N." The $N_{DIMD}$ computed predictors are combined through a weighted average to compute a block predictor for the current chroma component pixel block (702).

Exemplary embodiment 2: $N_S$ = 0, $N_{DIMD} \geq$ 2, weighted sum by a function of HoG values: In the second exemplary embodiment of the extended DIMD scheme, all the selected intra prediction video coding modes are selected based on a gradient analysis ($N_S$ = 0, $N_{DIMD} \geq$ 2). For example, $N_{DIMD}$ intra prediction modes are selected based on the $N_{DIMD}$ largest HoG values. $N_{DIMD}$ predictors $P_i$ (i = 1... $N_{DIMD}$) are then computed using the $N_{DIMD}$ selected intra prediction video coding modes. For i = 1... NDIMD, Wi is assumed to be the value of the HoG that corresponds to the Pi computed based thereon. Let f be a function, such as for example identity, square root, logarithm. In this exemplary embodiment, the final predictor $P_B$ is computed as a pixel-to-pixel weighted sum of predictors $P_i$ (i = 1... $N_{DIMD}$): $P_B$ = sum ($f(W_i) \cdot P_i$) / sum($f(W_i)$), (i = 1...$N_{DIMD}$).

Exemplary embodiment 3: $N_S$ = 0, $N_{DIMD} \geq$ 2, addition of HoG-dependent constraints: In the third exemplary embodiment of the extended DIMD scheme, all the selected intra prediction video coding modes are selected based on a gradient analysis ($N_S$ = 0, $N_{DIMD} \geq$ 2). For example, $N_{DIMD}$ intra prediction modes are selected based on the $N_{DIMD}$ largest HoG values. $N_{DIMD}$ predictors $P_i$ (i = 1... $N_{DIMD}$) are then computed using the $N_{DIMD}$ selected intra prediction video coding modes.

In this embodiment, some selected intra prediction video coding modes may be discarded if they don't fulfill a predetermined condition. For example, assuming that all intra prediction video coding modes are selected based on a corresponding HoG value, some selected intra prediction video coding modes may be discarded if their corresponding HoG value is below a predetermined threshold.

For example, let V be the second largest HoG value of the selected intra prediction modes. Any intra prediction mode for which the corresponding HoG value is lower than $V \cdot T$, where T is an arbitrary constant, may be cancelled, that is, discarded from the set of selected modes. In some embodiments, T may be chosen equal to 0.5, in a range running from 0.5 to 1, or between 0 and 1: $0 < T \leq 1$.

Let $N'_{DIMD}$ be the new number of intra predictors: $2 \leq N'_{DIMD} \leq N_{DIMD}$. The $N'_{DIMD}$ predictors $P_i$ (i = 1... $N'_{DIMD}$) may be computed using the $N'_{DIMD}$ selected intra prediction video coding modes, and the final predictor $P_B$ may be computed as a mathematical function of predictors $P_i$ (i = 1... $N'_{DIMD}$).

In this example, a constraint is added on the HoG value in order to avoid blending with predictors which are determined as unreliable.

Exemplary embodiment 4: $N_S \geq$ 1, $N_{DIMD} \geq$ 1: In the fourth exemplary embodiment of the extended DIMD scheme, at least one of the selected intra prediction video coding modes is selected based on a gradient analysis, and at least one selected mode is selected based on another scheme, such as for example rate distortion optimization ($N_S \geq$ 1, $N_{DIMD} \geq$ 1). For example, the $N_{DIMD}$ intra prediction modes are selected based on the $N_{DIMD}$ largest HoG values.

Assuming that $N_S$ intra prediction modes among S are selected using any method, as for example rate distortion optimization, the respective indices of these $N_S$ intra prediction modes need to be transmitted to the decoder.

The N = $N_S$ + $N_{DIMD}$ predictors $P_i$ (i = 1...N) are then computed using the N selected intra prediction video coding modes, and the final block predictor $P_B$ is computed as a mathematical function of $P_i$ (i = 1... N).

Exemplary embodiment 5: $N_S \geq$ 1, $N_{DIMD} \geq$ 1, no duplicates: In the fifth exemplary embodiment of the extended DIMD scheme, at least one of the selected intra prediction video coding modes is selected based on a gradient analysis, and at least one selected mode is selected based on another scheme, such as for example rate distortion optimization ($N_S \geq$ 1, $N_{DIMD} \geq$ 1). For example, the $N_{DIMD}$ intra prediction modes are selected based on the $N_{DIMD}$ largest HoG values.

Assuming that $N_S$ intra prediction modes among S are selected using any method, as for example rate distortion optimization, the respective indices of these $N_S$ intra prediction modes may advantageously be transmitted to the decoder.

In this exemplary embodiment, the selection of intra prediction video coding modes may be enhanced by discarding any duplicate mode in the $N_{DIMD}$ intra prediction modes and Ns intra prediction modes.

For example, each of the $N_{DIMD}$ intra prediction modes may be selected based on the largest HoG values, provided that an identical mode has not already been selected in the Ns selected intra prediction modes. In the case where an intra prediction mode initially selected based on the HoG is discarded, it may be replaced with another intra prediction mode selected based on the HoG (e.g. based on a different HoG value).

The N = $N_S$ + $N_{DIMD}$ predictors $P_i$ (i = 1...N) are then computed using the N selected intra prediction video coding modes, and the final block predictor $P_B$ is computed as a mathematical function of $P_i$ (i = 1... N).

This exemplary embodiment advantageously avoids the blending of identical predictors.

Exemplary embodiment 6: $N_S$ = 0, $N_{DIMD} \geq 2$, addition of decoding process-dependent constraints: In some embodiments, constraints other than HoG-related constraints (as illustrated in the third exemplary embodiment) may be taken into account, in addition to or as an alternative to HoG-related constraints. For example, constraints related to the decoding process (e.g. to the block size) may be accounted for when generating the final block predictor.

For example, in the sixth exemplary embodiment of the extended DIMD scheme, all the selected intra prediction video coding modes are selected based on a gradient analysis ($N_S$ = 0, $N_{DIMD} \geq 2$). For example, $N_{DIMD}$ intra prediction modes are selected based on the $N_{DIMD}$ largest HoG values. $N_{DIMD}$ predictors $P_i$ (i = 1... $N_{DIMD}$) are then computed using the $N_{DIMD}$ selected intra prediction video coding modes.

The parameter $N_{DIMD}$ may be chosen as a function of the current block B size. For example, let size = max(block width, block height) and $N_{DIMD}$ = 2 + $\log_2$(size).

The $N_{DIMD}$ intra prediction mode may be selected with the largest HoG values. Then the $N_{DIMD}$ predictors $P_i$ (i = 1... $N_{DIMD}$) may be computed using the $N_{DIMD}$ selected intra prediction video coding modes, and the final predictor $P_B$ may be computed as a pixel-to-pixel average of predictors $P_i$ (i = 1...$N_{DIMD}$): $P_B$ = sum ($P_i$) / $N_{DIMD}$, (i = 1...$N_{DIMD}$).

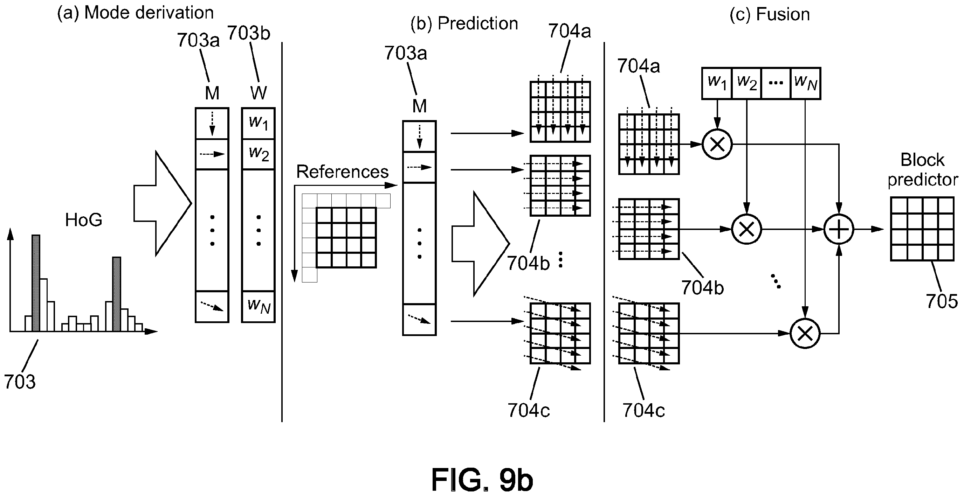

Figures 9a and 9b illustrate embodiments of DIMD methods that may be used for processing pixel blocks of a chroma component image according to embodiments of the present subject disclosure.

Shown on Fig. 9a is a current chroma component pixel block (702) for which an application area (sometimes referred to as "template" in the following and in the figures) (701) has been determined. A histogram of gradients (HoG) (703) is computed, and three predictors (704a, 704b, 704c) are determined based on the three greatest values of the histogram (703). In the illustrated example, $N_{DMID}$ = 3. The determined predictors are combined using a weighted average to generate a final block predictor (705) for the current pixel block.

Shown on Fig. 9b is a mode derivation (DIMD) phase (a) which comprises the generation of a histogram of gradients (HoG) (703), based on which a set of intra prediction video coding modes (703a) are selected based on their respective weights (703b) in the histogram (703). A vector of selected of intra prediction video coding modes (703a), and a vector of corresponding weight values ($w_1$, $w_2$, ..., $w_N$) in the histogram (703b), are generated as result of the mode derivation phase (a).

The exemplary embodiment illustrated on Fig. 9b corresponds to a case where the N selected modes are all selected based on the histogram that is, based on a gradient analysis. In embodiments where at least one mode is not selected based on the gradient analysis ($N_s \geq 1$), weight values $w_j$ may be predefined for those modes which are not selected based on the gradient analysis.

A prediction phase (b) comprises the computation of a predictor (704a, 704b, 704c) for each of the intra prediction video coding modes (703a) selected based on the histogram (703) as a result of the mode derivation phase.

A fusion phase (c) comprises the combining of the computed predictors (704a, 704b, 704c), each predictor $P_i$ (i = 1, ..., $N_{DIMD}$) being assigned the weight $w_i$ determined for the corresponding mode during the mode derivation phase (a) (vector (703b) of weight values ($w_1$, $w_2$, ..., $w_N$)), in order to generate a final block predictor (705) of a current pixel block using a weighted sum of the predictors $P_i$ (i = 1, ..., $N_{DIMD}$).

Referring back to Fig. 3d, various embodiments can be derived from the sparse DIMD scheme illustrated on Fig. 3d, which may advantageously be used for processing chroma component pixel blocks of a chroma component image according to embodiments of the present subject disclosure, and of which a few examples are provided here-below:

Exemplary embodiment 1: feature=block dimensions, S = coordinates that are multiple of min(width,height):

In the first exemplary embodiment of the sparse DIMD scheme, the features used for determining the application area are the dimensions of the current chroma component pixel block, and the pixels selected for defining the application area are those pixels of the set S whose coordinates are a multiple of the smallest between the width of the current block and the height of the current block: Let the function G be G(B)=V={width$_B$, height$_B$} (N=2), then choose S1 as the pixel set comprising one column and one row of D with the distance of 2 pixels from left and top sides of the current block B, respectively. Let A=minimum(width$_B$,height$_B$). From the left column of S1, select all pixels whose y coordinate is a multiple of A as pixels of the application area (S). From the top row of S1, select all pixels whose x coordinate is a multiple of A as pixels of the application area (S).

Exemplary embodiment 2: feature=block dimensions, S = coordinates that are multiple of a constant:

In the second exemplary embodiment of the sparse DIMD scheme, the features used for determining the application area are the dimensions of the current chroma component pixel block, and the pixels selected for defining the application area are those pixels of the set S whose coordinates are a multiple of a predetermined constant: Let the function G be G(B)=V={width$_B$, height$_B$} (N=2), then choose S1 as the pixel set comprising one column and one row of D with the distance of 2 pixels from left and top sides of the current block B, respectively. Let A be a constant number, for example a constant smaller than the smallest between $width_B$ and $height_B$. From the left column of S1, select all pixels whose y coordinate is a multiple of A as pixels of the application area (S). From the top row of S1, select all pixels whose x coordinate is a multiple of A as pixels of the application area (S).

Therefore, in one or more embodiments, the used sparse DIMD scheme may comprise: determining a parameter A based on the width and/or the height of the current pixel block. In such embodiments, the application area may be determined based on the selecting at least one pixel whose coordinates (x;y) are related to the parameter A.

Exemplary embodiment 3: feature=block thickness, S = denser on thin side, sparser on thick side:

In the third exemplary embodiment of the sparse DIMD scheme, the feature used for determining the application area is the block thickness of the current block, and the pixels selected for defining the application area are pixels of the set S determined based on the current chroma component block thickness ratio: Let the function G be $G(B)=V=\{width_B, height_B\}$ (N=2), then choose S1 as the pixel set comprising one column and one row of D with the distance of 2 pixels from left and top sides of the current block B, respectively. Let $A_1$ and $A_2 = 2 \times A_1$ be two constant numbers smaller than the smallest between $width_B$ and $height_B$. Let $K= width_B/height_B$ be the thickness ratio of the current chroma component block. If K == 1, then do as Example 2, with $A=A_1$. If K > 1, then from the top row of S1, select all pixels whose x coordinate is a multiple of $A_1$ as pixels of the application area (S). And from the left column of S1, select all pixels whose y coordinate is a multiple of $A_2$ as pixels of the application area (S). If K < 1, then from the top row of S1, select all pixels whose x coordinate is a multiple of $A_2$ as pixels of the application area (S). And from the left column of S1, select all pixels whose y coordinate is a multiple of $A_1$ as pixels of the application area (S).

Exemplary embodiment 4: feature=intra mode of neighbors, S = sparser in coherent neighborhood, denser in complex neighborhood

Let the function G be $G(B_D)=\{mode_{left}, mode_{top}, mode_{top-left}\}$, where $mode_{left}$, $mode_{top}$ $mode_{top-left}$ are intra prediction modes of blocks at left, top and top-left of B (N=3). Choose S1 as the pixel set comprising one column and one row of D with the distance of 2 pixels from left and top sides of the current chroma component block B, respectively. Let $A_1$ and $A_2 = 2 \times A_1$ be two constant numbers smaller than the smallest possible block width or height. If ($mode_{left}$ == $mode_{top}$== $mode_{top-left}$), then texture is inferred to be uniform and simple. In this case, from top (left) row/column of S1, select all pixels whose x (y) coordinate is a multiple of $A_2$ (sparser HoG computation). On the contrary, if !($mode_{left}$ == $mode_{top}$== $mode_{top-left}$), then texture is inferred to be non-uniform and complex. In this case, from top (left) row/column of S1, select all pixels whose x (y) is a multiple of $A_1$ (sparser HoG computation).

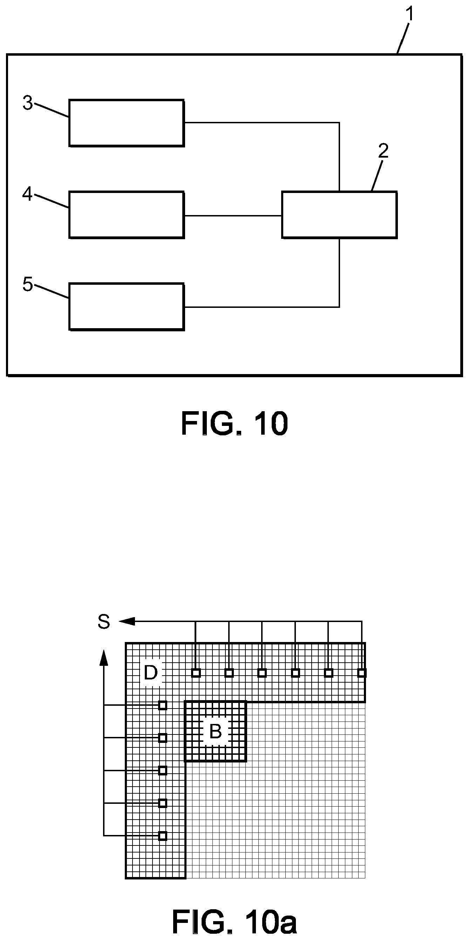

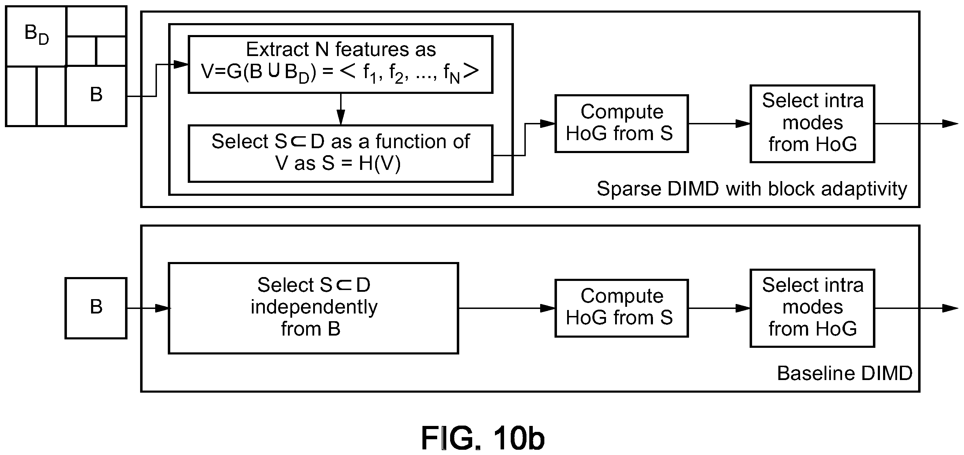

Fig. 10 illustrates an exemplary video coding and/or decoding apparatus or unit 1 configured to use an image processing feature in accordance with embodiments of the present subject disclosure.

The apparatus 1, which may comprise one or more computers, includes a control engine 2, an image processing engine 3, a data communication engine 4, a memory 5, and a power supply (e.g., a battery, plug-in power supply, etc.) (not represented on the figure).

In the architecture illustrated on Fig. 10, all of the image processing engine 3, data communication engine 4, and memory 5 are operatively coupled with one another through the control engine 2.

In one or more embodiments, the image processing engine 3 may be configured to perform various aspects of embodiments of the proposed method for image processing as described herein. In some embodiments, the image processing engine 3 may be incorporated in a video compression engine configured for performing image encoding and/or decoding according to embodiments of the present subject disclosure.

In one embodiment, the data communication engine 4 is configured to receive input image data and output processed image data, and process received input video data and output an encoded bit stream in the case where the apparatus is implemented in an encoder, and configured to receive an encoded bit stream and output decoded video data, and process received encoded bit stream in the case where the apparatus is implemented in a decoder.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, causes the processor to perform the elements described herein. In addition, the memory 5 may be any type of data storage computer storage medium, capable of storing a data structure representing a computer network to which the apparatus 1 belongs, coupled to the control engine 2 and operable with the data communication engine 4 and the image processing engine 3 to facilitate management and processing of video data stored in association therewith.

In embodiments of the present subject disclosure, the apparatus 1 is configured for performing the image processing methods described herein.

It will be appreciated that the apparatus 1 shown and described with reference to Fig. 10 is provided by way of example only. Numerous other architectures, operating environments, and configurations are possible. Other embodiments of the node may include fewer or greater number of components, and may incorporate some or all of the functionality described with respect to the apparatus components shown in Fig. 8. Accordingly, although the control engine 2, image processing engine 3, data communication engine 4, and memory 5 are illustrated as part of the apparatus 1, no restrictions are placed on the location and control of components 2 - 5. In particular, in other embodiments, components 2 - 5 may be part of different entities or computing systems.

The proposed method may be used for the processing, for purposes of encoding or compression, or decoding or decompression, of input data which may correspond, depending on the embodiment, to an image, a picture, a video frame, or video data.

Fig. 10a illustrates a current chroma component block B in a chroma component image, with a set D of pixels corresponding to a causal area, as defined above. In the illustrated embodiment, the set S is a selection of pixels which constitute a sparse application area according to the sparse DIMD scheme.

Figure 10b illustrates an exemplary sparse DIMD scheme. In the baseline DIMD scheme, the application area is selected in a causal area as discussed above, regardless of features of the current block. As illustrated on figure 10b, in embodiments of the sparse DIMD scheme, a vector V of N features may be extracted based on a set $B \cup B_D$ using a feature extraction function G, and the application area may be selected as a subset of pixels of a causal area D based on the feature vector V.

Once an application area is determined, in some embodiments as described above a histogram HoG may be calculated, and used for the selection of one or more intra prediction modes.

According to embodiments of the sparse DIMD, a set of block-level features may advantageously be used to determine the number and the position of neighboring pixels from which an intra mode is derived.

The sparse DIMD scheme therefore improves the baseline DIMD scheme in terms of encoder and decoder throughput as well as coding performance. According to the baseline DIMD, one may choose a subset of template pixels to compute HoG and eventually derive intra prediction modes. According to the sparse DIMD scheme, the subset selection may be carried out using an adaptive function based on block features. Given this function, template selection may be applied systematically in all blocks with different specifications, which results in different patterns of template pixels. The choice of subset selection function is arbitrary, but it may be dependent to block-level features, extracted either from the current block and/or from one or more neighboring blocks.

The main benefit of the sparse DIMD scheme is to make DIMD scalable in terms of number of operations per pixel. This allows to customize DIMD in a wider range of performance-complexity tradeoff under different levels of hardware/software complexity constraints. Complexity scalability may be beneficial in two occasions:

Acceleration: One may want to apply the HoG computation sparser than usual, when the complexity constraint is strict. In this situation, the level of sparsity can be adjusted as a function of some block-level features, in order to control the damage of sparsity.

Performance improvement: Similar logic can be used when the goal is to compute the HoG on a denser set of neighboring pixels, in order to obtain a more accurate texture representation. In this case, one may use block-level features to determine in which conditions it is more beneficial form the coding performance to perform denser HoG computation.

One of the advantages of DIMD is to save the rate cost of "explicit" intra mode coding by replacing it with an "implicit" mode derivation scheme at the decoder side. The assumption is that texture in neighboring pixels often carries adequate information about the best texture angle (s). However, the decoder-side complexity of the texture analysis should be limited in order to obtain a reasonable coding efficiency-complexity trade-off. The proposed method advantageously reduces the computational cost of implicit derivation of IPM for a block both at the encoder and decoder sides.

In the following, exemplary aspects of the proposed method are described with reference to the VVC video codec, in particular related to the gradient analysis, according to embodiments of the present subject disclosure.

According to one or more embodiments, a gradient analysis may be used that can replace the IPM signaling, using a gradient-based texture analysis. The proposed method can advantageously be applied on either of luminance and chrominance component pixels and skip all IPM-related signaling, including the MPM flag and list index for luminance as well as DM/LM flag and IPM index for chrominance.

The integration of DIMD into the VVC codec may require normative changes of the decoder procedure. In particular, as discussed above in one or more embodiments parsing of a new block-level flag may be added to determine the use of DIMD at the decoder side. This flag may be called DIMD flag and an intra block associated with a DIMD flag equal to one is referred to as a "DIMD block" in the following.

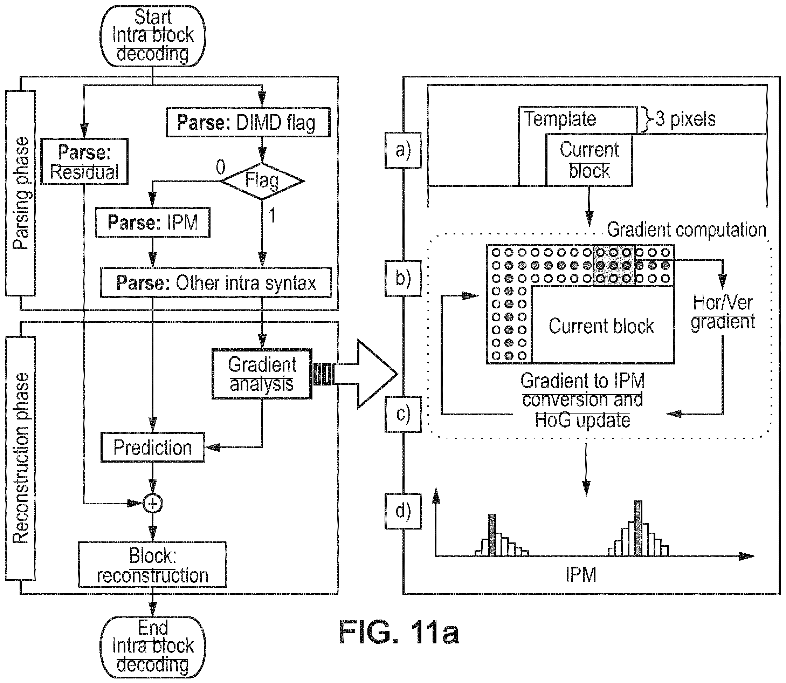

Fig. 11a illustrates an exemplary design of a decoder according to one or more embodiments of the present disclosure. The design proposed in Fig. 11a is advantageously compatible with a VVC decoder in which the proposed DIMD scheme may be integrated. In the proposed design, the DIMD flag is parsed first for each intra block and in case it infers a DIMD block, parsing of the IPM information is skipped. In some embodiments, the IPM information of a luminance block may include the MPM flag as well as the list index, while that of a chrominance may include DM/LM flags and the list index. Fig. 11a shows the design of the VVC Test Model (VTM), integrated with DIMD. This design is generic in the sense that it can be applied to either of the luminance or chrominance components. As shown on Fig. 11a, the decoding procedure consists of a parsing phase and a reconstruction phase. In addition to the modifications in the parsing phase, DIMD also integrates a gradient analysis module in the reconstruction phase. In one or more embodiments, this module may be configured to perform a texture analysis method to quantify how appropriately each IPM can model the texture of a block, using information that is available at the decoder side. Based on this information, one or more IPMs may implicitly be derived for a block and used normally for the prediction. An exemplary embodiment of this gradient-based analysis is illustrated on the right side in Fig. 11a.

In one or more embodiments, an efficient gradient analysis may be performed on the neighboring pixels to avoid the need for applying a TM-based process. A texture analysis scheme based on the Histogram of Gradient (HoG) may be used in embodiments of the used DIMD scheme. The input to the HoG procedure is a set of reference reconstructed samples in the neighborhood of the current block. The expected output is a histogram $H = \{H[i]; i = 2, ... 66\}$ with 65 entries, corresponding to the set of angular IPMs in VVC, where indexes 0 and 1 are reserved for non-angular IPMs of DC and planar.

The use of texture information to determine whether the DC and planar modes, which could provide efficient predictions for a block, is more difficult than angular modes. The main reason behind this behavior is the fact that DC and planar IPMs are also frequently used for excessively complex textures. Experimental results show that in such situation, a false-negative derivation of DC or planar mode often results in a large increase in the rate-distortion cost of blocks.

Therefore, it may in some embodiments be determined that the proposed intra mode derivation merely focuses on angular IPMs and leaves the use of DC and planar modes to be determined by the regular mode coding. The HoG construction procedure may be applied at the block-level with initialization of $H[i] = 0$ for $i = 2, ...,66$ and may in some embodiments comprise the following four operations. At the end of these operations, the HoG entries are filled and one or more IPMs can be derived for the input block. The four operations of the HoG procedure, as illustrated by Fig. 11a, may be as follows:

Operation 1: Template selection: Pixels on which the texture analysis is performed should according to some embodiments be available both at encoder and decoder sides. Therefore, a set of three reference rows and columns from above and left of the current block is used as the application area. Part (a) of Fig. 11a shows how the application area may be positioned around the current block. Experiments show that using three reference lines is sufficient for obtaining adequate texture information. Based on conducted experiments, use of more lines unnecessarily increases the algorithm complexity with negligible or no improvement in the performance. Once the application is determined, the following operations two and three may in some embodiments be repeated on each pixel in the middle line of the template.

Operation 2: Angle gradient descriptor: Let s be a pixel in the middle line of the template, as shown with a black dot in part (b) of Fig. 11a. A window $Ws$ may be defined to restrict a 3 x 3 neighborhood around s. Assuming that the texture in $Ws$ has an angular direction, the goal is to find its angle as $\theta$.

Given a 3 x 3 gradient operator (e.g. a Sobel filter) as M, the horizontal $(G_{hor}^s)$ and vertical $(G_{ver}^s)$ angle intensities may be computed as: $G_{dir}^s = W^s * M_{dir}$, with *dir = hor, ver.*

Upon computation of the horizontal and vertical gradient intensities, an angle gradient descriptor Ds may be computed as:

$$D_s = \begin{cases} tan\ \theta^s = \dfrac{G_{ver}^s}{G_{hor}^s} \ if\ G_{ver}^s > G_{hor}^s \\[3mm] cot\ \theta^s = \dfrac{G_{hor}^s}{G_{ver}^s} \ if\ G_{ver}^s \leq G_{hor}^s \end{cases}$$

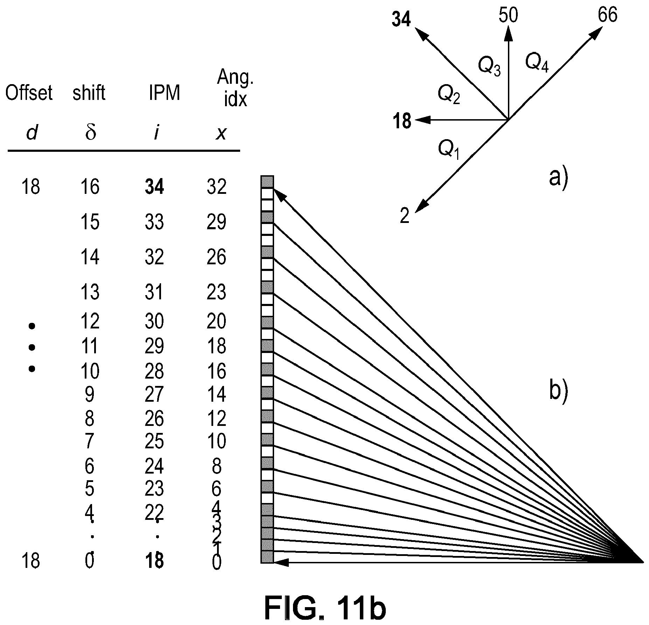

Operation 3: Conversion of gradient descriptor to IPM: In VVC, a total of 65 angular IPMs unevenly cover a range of 180 degrees. The intentional unevenness of this design provides a finer texture modeling of horizontal and vertical patterns that are more common in video contents. More precisely, the elapsed angle between consecutive IPMs around the vertical and horizontal IPMs are smaller than around the diagonal IPMs. Fig. 11b illustrates an exemplary distribution of angular IPM in the second quarter of the angle range.

In embodiments of operation 3 of the intra mode derivation, the mapping of an arbitrary angle gradient descriptor $D$ to an IPM index may performed. Let $i \in [2,66]$ be an angular IPM index. In VVC, this index is composed of an offset d and a shift $\delta$: $i = d + sgn \times \delta$, where $sgn$ and $d$ are determined based on the quarter wherein $i$ is located, for example based on a look-up table providing the relation between the angle intensities and the derivation of $sgn$ and $d$ for each IPM quarter.

The forward mapping of $i$ to the angle gradient descriptor $D$ already exists in VVC. This mapping is used for angular projection of reference pixels into a prediction block. Fig. 11b illustrates angular IPMs of VVC, that is, VVC IPMs n°2 to 66. Part a) of Fig. 11b shows angular IPMs covering the range of 180 degrees in four quarters (denoted $Q_1$ to $Q_4$), and part b) of Fig. 11b shows uneven angle distribution in the second quarter (i.e. the range between IPM n°18 and IPM n° 34). As shown in Fig. 11b, each IPM, denoted as $i$, is associated with an angle index, denoted as $x$. The angle index $x$ corresponds to the descriptor of the angle between $i$ and the quarter offset $d$. In case of the second quarter which is shown in Fig. 11b, the angle index $x$ represents the scaled tangent of the angle between $i$ and the pure horizontal IPM. Moreover, the IPM shift $\delta$ is defined for each IPM as $i - d$. This logic is advantageously applicable to other quarters using their proper $sgn$ and $\delta$. Using the same principle, one can revert the forward mapping of $i$ to $D$ into the backward mapping of $D$ to $i$ and apply it on each pixel $s$ in the middle line of the application area. In some embodiments, it may be desirable to determine the best IPM $i$ for a given angle gradient descriptor $D$, computed in operation 2. For this purpose, first, the angle index at pixel $s$ is computed from Ds, for example with the following formula

$$x^s = \underset{x}{argmin} \left| D^s - \frac{x}{32} \right|, \quad x = 0,1,...,32.$$

Then, a look-up table T, as shown in part b) of Figure 11b, may be used to map the angle index xs into its corresponding shift $\delta$: $\delta^s = T(x^s)$. Once $\delta^s$ is determined, the best IPM at pixel s can be computed by the above-mentioned equation $i = d + sgn \times \delta$, as $d$ and $sgn$ can be obtained from a predefined look-up table as described above. Upon computing the best IPM of $Ws$ as is, the HoG can be updated with the gradient intensity at $s$ as: $H[i^s] = H[i^s] + I^s$, where $I^s$ is computed as $I^s = |G_{hor}^s| + |G_{ver}^s|$.

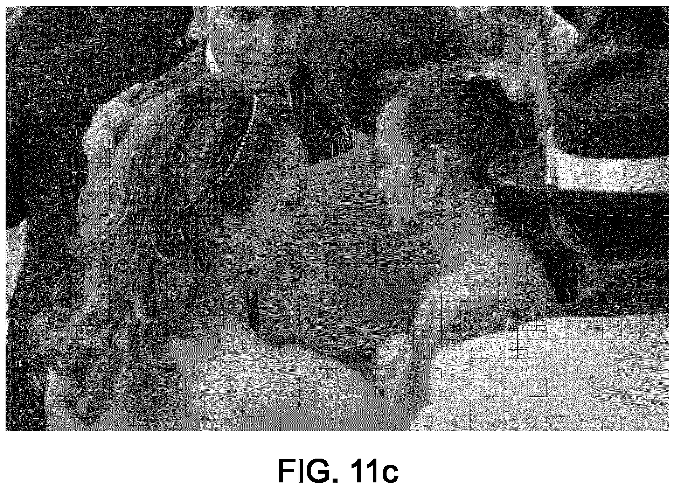

Operation 4: Intra mode derivation from HoG: Given a histogram of gradient, $H$, filled by the procedure described in operations one to three, different schemes may be employed to derive specific intra prediction directions. In one or more embodiments, one may use the IPM corresponding to the largest histogram entry of block as the main derived IPM of that block. Correspondingly, Fig. 11c shows the sequence-level performance of DIMD. In this figure, the afore-mentioned operations are applied to derive one single IPM for each block in VTM-4. Furthermore, the DIMD flag is coded for all intra blocks. As a result, some blocks have been selected as DIMD blocks. The visualization of the DIMD blocks in this figure shows that the output of the intra mode derivation is highly correlated to the texture pattern.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1.  A method of processing an image, comprising:

    - extract from the image a plurality of component images comprising a first chroma component image and a second chroma component image;
    - divide each of the plurality of component images into respective sets of component pixel blocks, and define respective processing sequences of the component pixel blocks of the sets of component pixel blocks;
    - for a current chroma component pixel block of the respective set of component pixel blocks of the first and/or second chroma component image, perform an intra mode prediction method to obtain one or more intra prediction modes for the current chroma component pixel block, wherein the intra mode prediction method comprises, for the current chroma component pixel block:

        ∘ determining an application area comprising a set of at least one pixel in at least one pixel block of one of the plurality of component images, wherein the at least one pixel block has already been processed according to a respective processing sequence defined for the one of the plurality of component images;
        ∘ performing a gradient analysis on at least one pixel of the application area;
        ∘ selecting, based on results of the gradient analysis, at least one intra prediction video coding mode among a plurality of intra prediction video coding modes usable for encoding and/or decoding the current chroma component pixel block.

2.  The method according to claim 1, wherein the first chroma component is a blue-difference, Cb, chroma component, and the second chroma component is a red-difference, Cr, chroma component.

3.  The method according to any of the preceding claims, wherein the intra mode prediction method is performed for at least one current chroma component pixel block of each of the respective sets of component pixel blocks of the first and second chroma component images.

4.  The method according to any of the preceding claims, wherein the plurality of component images comprises the first chroma component image, the second chroma component image, and a luma component image.

5.  The method according to any of the preceding claims, wherein the respective sets of component pixel blocks of the first and second chroma component images comprise at least one common chroma component pixel block used as the current chroma component pixel block, and wherein the intra mode prediction method is performed on the common chroma component pixel block for each of the first and second chroma component images.

6.  The method according to any of the previous claims, wherein the performing the gradient analysis comprises: for at least one pixel of the application area, computing a gradient representing a directional change of an intensity at the pixel, and wherein the selecting is based on at least one of the computed gradients.

7.  The method according to any of the previous claims, wherein the performing the gradient analysis further comprises: computing a first gradient value representing an estimate magnitude of the directional change of the intensity at the at least one pixel, and a second gradient value representing an estimate orientation of the directional change of the intensity at the at least one pixel.

8.  The method according to claim 6, wherein the selecting the intra prediction video coding mode comprises: for the at least one pixel of the application area, mapping the computed gradient to an intra prediction mode among the plurality of intra prediction video coding modes.

9.  The method according to any of the previous claims, wherein the selecting the intra prediction video coding mode further comprises: determining respective weight values for several intra prediction modes among the plurality of intra prediction video coding modes, based on gradients computed for pixels of the application area.

10. The method according to any of the preceding claims, wherein the at least one pixel block of the application area is spatially preceding a pixel block of the one of the plurality of component images corresponding to the current chroma component pixel block of the first or second chroma component image.

11. The method according to any of the preceding claims, wherein the at least one pixel block of the application area is spatially co-located with a pixel block of the one of the plurality of component images corresponding to the current chroma component pixel block of the first or second chroma component image, wherein the one of the plurality of component images is different from the first or second chroma component image in which the current chroma component pixel block is comprised.

12. The method according to any of the preceding claims, performed by a processor of an image encoder, and further comprising, at the image encoder: encoding, via the processor, the current chroma component pixel block according to the at least one intra prediction video coding mode selected at the encoder based on the intra mode prediction method performed at the encoder on the current chroma component pixel block.

13. The method according to any of claims 1 to 11, performed by a processor of an image decoder, and further comprising, at the image decoder: decoding, via the processor, the current chroma component pixel block according to the at least one intra prediction video coding mode selected at the decoder based on the intra mode prediction method performed at the decoder on the current chroma component pixel block.

14. An apparatus, the apparatus comprising a processor and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.

FIG. 1

FIG. 2a

FIG. 2b

EP 3 962 080 A1

**FIG. 2c**

221

| P1 → | P1 | P1 | P1 | P1 | P1 | P1 | P1 | P1 |
| P2 → | P2 | P2 | P2 | P2 | P2 | P2 | P2 | P2 |
| P3 → | P3 | P3 | P3 | P3 | P3 | P3 | P3 | P3 |
| P4 → | P4 | P4 | P4 | P4 | P4 | P4 | P4 | P4 |
| P5 → | P5 | P5 | P5 | P5 | P5 | P5 | P5 | P5 |
| P6 → | P6 | P6 | P6 | P6 | P6 | P6 | P6 | P6 |
| P7 → | P7 | P7 | P7 | P7 | P7 | P7 | P7 | P7 |
| P8 → | P8 | P8 | P8 | P8 | P8 | P8 | P8 | P8 |

220

**FIG. 2d**

231

| P1 | P2 | P3 | P4 | P5 | P6 | P7 | P8 |
|---|---|---|---|---|---|---|---|
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |

230

241

| P1 | P2 | P3 | P4 | P5 | P6 | P7 | P8 |
|----|----|----|----|----|----|----|----|

| P1 | P2 | P3 | P4 | P5 | P6 | P7 | P8 |
|----|----|----|----|----|----|----|----|
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |

# FIG. 2e

240

Determining application area
for a current block ⟶301

Performing a gradient analysis on
pixels of the application area ⟶302

Selecting an intra prediction video
coding mode based on results of
the gradient analysis ⟶303

Encoding / decoding the current block
according to the selected intra
prediction video coding mode ⟶304

## FIG. 3a

Determine an application area
for a current pixel block ⟶305

Perform a gradient analysis
on pixels of the application area ⟶306

Select at least two intra prediction video
coding modes, with at least one mode
selected based on the gradient analysis ⟶307

Determine intra predictors of the current
pixel block based on the selected modes ⟶308

Generate a predictor of the current pixel
block based on the intra predictors ⟶309

# FIG. 3b

```
┌─────────────────────────────────┐
│   Determine an application area  │──305
│      for a current pixel block   │
└─────────────────────────────────┘
                 │
                 ▼
┌─────────────────────────────────┐
│      Perform a gradient analysis on │──306
│       pixels of the application area │
└─────────────────────────────────┘
                 │
                 ▼
┌───────────────────────────────────────────┐
│  ┌──────────────────────────────────┐      │──307a
│  │  Select $N_S$ intra prediction video coding │
│  │    mode(s) among S modes ($N_S \geq 0$)  │
│  └──────────────────────────────────┘      │
│                 │                            │──307b
│                 ▼                            │
│  ┌──────────────────────────────────┐      │
│  │  Select $N_{DIMD}$ intra prediction mode(s) │
│  │    based on the gradient analysis │
│  │  ($N_{DIMD} \geq 1$ ; $N_S + N_{DIMD} \geq 2$) │
│  └──────────────────────────────────┘      │
└───────────────────────────────────────────┘
                 │
                 ▼
┌─────────────────────────────────┐
│ Determine N intra predictors $P_i$ (i = 1,..., N) │──308a
│    of the current pixel block based on │
│   the selected modes (N = $N_S + N_{DIMD}$) │
└─────────────────────────────────┘
                 │
                 ▼
┌─────────────────────────────────┐
│  Generate a final block predictor PB of │──309a
│    the current pixel block based on the │
│     N intra predictors $P_i$ (i = 1,..., N) │
└─────────────────────────────────┘
```

## FIG. 3c

Based on a feature of the current pixel block and/or of a first block of previously processed pixels, determine an application area ⌐350

Perform a gradient analysis on one or more pixels of the application area ⌐351

Select, based on the results of the gradient analysis, one or more intra prediction video coding modes ⌐352

## FIG. 3d

Extract N features as $V = G(B \cup B_D) = \, < f_1, f_2, ..., f_N >$ ⌐353

Select $S \subset D$ as a function of V as $S = H(V)$ ⌐354

Compute histogram HoG from S ⌐355

Select intra mode(s) from HoG ⌐356

## FIG. 3e

380

extract from the image a plurality of component images comprising a first chroma
component image and a second chroma component image

381

divide each of the plurality of component images into respective sets of
component pixel blocks, and define respective processing sequences of the
component pixel blocks of thesets of component pixel blocks

382

for a current chroma component pixel block of the respective set of component
pixel blocks of the first and/or second chroma component image, perform an intra
mode prediction method to obtain one or more intra prediction modes for the
current chroma component pixel block:

382a

determining an application area comprising a set of at leastone pixel
in at least one pixel block of one of the plurality of component images,
wherein the at least one pixel block has already been processed according
to a respective processing sequence defined for the one of the plurality
of component images

382d

performing a gradient analysis on at least one pixel of the application area

382c

selecting, based on results of the gradient analysis, at least one intra prediction
video coding mode among a plurality of intra prediction video coding modes
usable for encoding and/or decoding the current chroma component block

## FIG. 4

FIG. 5a

FIG. 5b

FIG. 5c

FIG. 5d

FIG. 5e

FIG. 5f

FIG. 5g

**FIG.6a**

**FIG. 6b**

FIG. 6c

FIG. 6d

FIG. 7

FIG. 8a

601

1. ☐      Current pixel

2. ▨      Neighbor pixel

3. ⌐      Application area

# FIG. 8b

FIG. 9a

FIG. 9b

FIG. 10

FIG. 10a

$B_D$

$B$

Extract N features as
$V = G(B \cup B_D) = < f_1, f_2, ..., f_N >$

Select $S \subset D$ as a function of
$V$ as $S = H(V)$

Compute
HoG from S

Select intra
modes
from HoG

Sparse DIMD with block adaptivity

$B$

Select $S \subset D$
independently
from B

Compute
HoG from S

Select intra
modes
from HoG

Baseline DIMD

FIG. 10b

**FIG. 11a**

| Offset | shift | IPM | Ang. idx |
|---|---|---|---|
| d | δ | i | x |
| 18 | 16 | **34** | 32 |
| | 15 | 33 | 29 |
| | 14 | 32 | 26 |
| | 13 | 31 | 23 |
| • | 12 | 30 | 20 |
| • | 11 | 29 | 18 |
| • | 10 | 28 | 16 |
| | 9 | 27 | 14 |
| | 8 | 26 | 12 |
| | 7 | 25 | 10 |
| | 6 | 24 | 8 |
| | 5 | 23 | 6 |
| | 4 | 22 | 4 |
| 18 | 0 | **18** | 0 |

FIG. 11b

FIG. 11c

Europäisches
Patentamt

European
Patent Office

Office européen
des brevets

## EUROPEAN SEARCH REPORT

Application Number

EP 20 30 5952

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2019/007490 A1 (HUAWEI TECH CO LTD [CN]; KOTRA ANAND MEHER [DE]) 10 January 2019 (2019-01-10) * page 1, line 3 - page 15, line 4; figures 1-5 * ----- | 1-15 | INV. H04N19/11 H04N19/105 H04N19/14 H04N19/176 H04N19/186 H04N19/593 |
| Y | MORA (ATEME) E ET AL: "CE3-related: Decoder-side Intra Mode Derivation", 12. JVET MEETING; 20181003 - 20181012; MACAO; (THE JOINT VIDEO EXPLORATION TEAM OF ISO/IEC JTC1/SC29/WG11 AND ITU-T SG.16), no. JVET-L0164 24 September 2018 (2018-09-24), XP030193691, Retrieved from the Internet: URL:http://phenix.int-evry.fr/jvet/doc_end _user/documents/12_Macao/wg11/JVET-L0164-v 1.zip JVET-L0164.docx [retrieved on 2018-09-24] * the whole document * ----- | 1-15 | |
| A | US 2020/045311 A1 (YOO SUNMI [KR]) 6 February 2020 (2020-02-06) * paragraph [0166] - paragraph [0227]; figures 1,2,8-13 * ----- -/-- | 1-15 | TECHNICAL FIELDS SEARCHED (IPC) H04N |

The present search report has been drawn up for all claims

| Place of search | Date of completion of the search | Examiner |
|---|---|---|
| Munich | 16 December 2020 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABDOLI (ATEME) M ET AL: "Non-CE3: Decoder-side Intra Mode Derivation with Prediction Fusion", 14. JVET MEETING; 20190319 - 20190327; GENEVA; (THE JOINT VIDEO EXPLORATION TEAM OF ISO/IEC JTC1/SC29/WG11 AND ITU-T SG.16) , no. JVET-N0342 18 March 2019 (2019-03-18), XP030203490, Retrieved from the Internet: URL:http://phenix.int-evry.fr/jvet/doc_end _user/documents/14_Geneva/wg11/JVET-N0342-v5.zip JVET-N0342-v5.docx [retrieved on 2019-03-18] * the whole document * | 1-15 | |
| A | ABDOLI (ATEME) M ET AL: "Non-CE3: Decoder-side Intra Mode Derivation (DIMD) with prediction fusion using Planar", 15. JVET MEETING; 20190703 - 20190712; GOTHENBURG; (THE JOINT VIDEO EXPLORATION TEAM OF ISO/IEC JTC1/SC29/WG11 AND ITU-T SG.16) , no. JVET-O0449 25 June 2019 (2019-06-25), XP030219609, Retrieved from the Internet: URL:http://phenix.int-evry.fr/jvet/doc_end _user/documents/15_Gothenburg/wg11/JVET-O0 449-v1.zip JVET-O0449/JVET-O0449.docx [retrieved on 2019-06-25] * the whole document * -/-- | 1-15 | TECHNICAL FIELDS SEARCHED (IPC) |

The present search report has been drawn up for all claims

| Place of search | Date of completion of the search | Examiner |
|---|---|---|
| Munich | 16 December 2020 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VENUGOPAL (FRAUNHOFER) G ET AL: "CE8 related: Intra Region-based Template Matching for luma and chroma", 11. JVET MEETING; 20180711 - 20180718; LJUBLJANA; (THE JOINT VIDEO EXPLORATION TEAM OF ISO/IEC JTC1/SC29/WG11 AND ITU-T SG.16) , no. JVET-K0050 5 July 2018 (2018-07-05), XP030198985, Retrieved from the Internet: URL:http://phenix.int-evry.fr/jvet/doc_end _user/documents/11_Ljubljana/wg11/JVET-K00 50-v2.zip JVET-K0050_v2.docx [retrieved on 2018-07-05] * the whole document * | 1-15 | |
| A | MORA (ATEME) E ET AL: "CE3: Decoder-side Intra Mode Derivation (tests 3.1.1, 3.1.2, 3.1.3 and 3.1.4)", 13. JVET MEETING; 20190109 - 20190118; MARRAKECH; (THE JOINT VIDEO EXPLORATION TEAM OF ISO/IEC JTC1/SC29/WG11 AND ITU-T SG.16) , no. JVET-M0094 3 January 2019 (2019-01-03), XP030200347, Retrieved from the Internet: URL:http://phenix.int-evry.fr/jvet/doc_end _user/documents/13_Marrakech/wg11/JVET-M00 94-v2.zip JVET-M0094-v2.docx [retrieved on 2019-01-03] * the whole document * | 1-15 | TECHNICAL FIELDS SEARCHED (IPC) |

The present search report has been drawn up for all claims

| Place of search | Date of completion of the search | Examiner |
|---|---|---|
| Munich | 16 December 2020 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 5952

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2020

| Patent document cited in search report | | Publication date | Patent family member(s) | | Publication date |
|---|---|---|---|---|---|
| WO 2019007490 | A1 | 10-01-2019 | EP | 3643062 A1 | 29-04-2020 |
| | | | US | 2020145668 A1 | 07-05-2020 |
| | | | WO | 2019007490 A1 | 10-01-2019 |
| US 2020045311 | A1 | 06-02-2020 | US | 2020045311 A1 | 06-02-2020 |
| | | | WO | 2018070713 A1 | 19-04-2018 |

EPO FORM P0459

For more details about this annex : see Official Journal of the European Patent Office, No. 12/82